# EUROPEAN PATENT APPLICATION

(11) **EP 4 528 371 A1**
(43) Date of publication of application: **26.03.2025**
(21) Application number: 23807548.5
(22) Date of filing: 12.05.2023
(51) Int. Cl.: G03B 5/00, G02B 7/04, G03B 30/00, H04N 23/57

(54) **MODULE DRIVING DEVICE AND OPTICAL DEVICE**

(30) Priority: 16.05.2022 JP 2022080481
(71) Applicant: Alps Alpine Co., Ltd., Tokyo 145-8501 (JP)
(72) Inventor: YOKOTA, Junichiro, Tokyo 145-8501 (JP)
(74) Representative: Maiwald GmbH
(86) International application number: PCT/JP2023/017832
(87) International publication number: WO 2023/223945

(57) **Abstract**

A module driving device (100) includes a module holder (2) configured to be movable relative to a fixed-side member (FB), a guide mechanism (GM) configured to guide rotation of the module holder (2) about an optical axis (OA) of a lens body (LS); a driver (DM) configured to rotate the module holder (2) about the optical axis (OA); and a connection member (3). The driver (DM) includes a plurality of shape memory alloy wires (SA) that are provided between a movable-side member (MB) and the fixed-side member (FB), the movable-side member (MB) including the module holder (2). The connection member (3) is connected to the module holder (2) at a plurality of first engagement portions (V1) of the connection member (3), and connected to the fixed-side member (FB) at a plurality of second engagement portions (V2) of the connection member (3). The guide mechanism (GM) is provided between the module holder (2) and the first engagement portions (V2), and between the fixed-side member (FB) and the second engagement portions (V2), such that the module holder (2) is rotatable about the optical axis (OA).

## Description

### TECHNICAL FIELD

The present disclosure relates to a module driving device and an optical device.

### BACKGROUND ART

An optical unit configured to rotate a camera module about an optical axis by a driving mechanism including a magnet and a coil, is known (see Patent Literature 1).

### CITATION LIST

### PATENT LITERATURE

Patent Literature 1: Japanese Laid-Open Patent Application No. 2021-139990

### SUMMARY OF THE INVENTION

### TECHNICAL PROBLEM

However, this optical unit requires a magnet and a coil, and thus may have a large size.

Therefore, it is desirable to provide a module driving device having a small size.

### SOLUTION TO THE PROBLEM

A module driving device according to an embodiment of the present disclosure includes: a fixed-side member; a module holder configured to hold an optical module and to be movable relative to the fixed-side member, the optical module including a lens body and an imaging element; a guide mechanism configured to guide rotation of the module holder about an optical axis of the lens body; a driver configured to rotate the module holder about the optical axis; and a connection member. The driver includes a plurality of shape memory alloy wires that are provided between a movable-side member and the fixed-side member, the movable-side member including the module holder. The connection member is connected to the module holder at a plurality of first engagement portions of the connection member, and connected to the fixed-side member at a plurality of second engagement portions of the connection member. The guide mechanism is provided between the module holder and the first engagement portions, between the fixed-side member and the second engagement portions, or both between the module holder and the first engagement portions and between the fixed-side member and the second engagement portions, such that the module holder is rotatable about the optical axis.

### ADVANTAGEOUS EFFECTS OF THE INVENTION

The module driving device described above can achieve a size smaller than that of a device that uses a magnet and a coil.

### BRIEF DESCRIPTION OF THE DRAWINGS

[FIG. 1] FIG. 1 is a perspective view of an optical device.
[FIG. 2] FIG. 2 is an exploded perspective view of the optical device.
[FIG. 3] FIG. 3 is an exploded perspective view of a module driving device.
[FIG. 4] FIG. 4 is a perspective view of a module holder to which various members are attached.
[FIG. 5] FIG. 5 is a view illustrating a top surface and a bottom surface of the module holder.
[FIG. 6] FIG. 6 is a perspective view of a connection member to which various members are attached.
[FIG. 7] FIG. 7 is a view illustrating a top surface and a bottom surface of the connection member.
[FIG. 8] FIG. 8 is a perspective view of a base member to which various members are attached.
[FIG. 9] FIG. 9 is a view illustrating a top surface and a bottom surface of the base member.
[FIG. 10] FIG. 10 is a top view of the module holder, the connection member, and the base member.
[FIG. 11] FIG. 11 is a cross-sectional view of the module holder, the connection member, and the base member.
[FIG. 12] FIG. 12 is a cross-sectional view of the module holder, the connection member, and the base member.
[FIG. 13] FIG. 13 is a right side view of the metal member to which shape memory alloy wires are attached.
[FIG. 14] FIG. 14 is a front view of the metal member to which the shape memory alloy wires are attached.
[FIG. 15] FIG. 15 is a perspective view of the metal member, the conductive member, a current-conducting member, and the shape memory alloy wires.
[FIG. 16] FIG. 16 is a view illustrating a path of a current flowing through a first wire.
[FIG. 17] FIG. 17 is a view illustrating a path of a current flowing through a second wire.
[FIG. 18] FIG. 18 is a view illustrating a path of a current flowing through a seventh wire.
[FIG. 19] FIG. 19 is a view illustrating a path of a current flowing through an eighth wire.
[FIG. 20] FIG. 20 is a table illustrating extension and shrinkage of the shape memory alloy wires for achieving movement of the module holder.
[FIG. 21] FIG. 21 is a front view of the module holder, the connection member, and the base member.
[FIG. 22] FIG. 22 is a right side view of the module holder, the connection member, and the base member.
[FIG. 23] FIG. 23 is a top view of the module holder, the connection member, and the base member.
[FIG. 24] FIG. 24 is an exploded perspective view of a lens driving device.
[FIG. 25] FIG. 25 is a perspective view of a module-side metal member, a leaf spring, a current-conducting member, and module-side shape memory alloy wires.
[FIG. 26] FIG. 26 is a top view of the module-side movable metal member and the leaf spring.
[FIG. 27] FIG. 27 is a view illustrating a path of a current flowing through the seventh wire that forms a module-side driver.
[FIG. 28] FIG. 28 is a view illustrating a path of a current flowing through the eighth wire that forms the module-side driver.
[FIG. 29] FIG. 29 is a table illustrating extension and shrinkage of the module-side shape memory alloy wires for achieving movement of a lens holder.
[FIG. 30] FIG. 30 is a perspective view of a module-side embedded current-conducting member, a third embedded current-conducting member, and an intermediate current-conducting member.

### DETAILED DESCRIPTION OF THE INVENTION

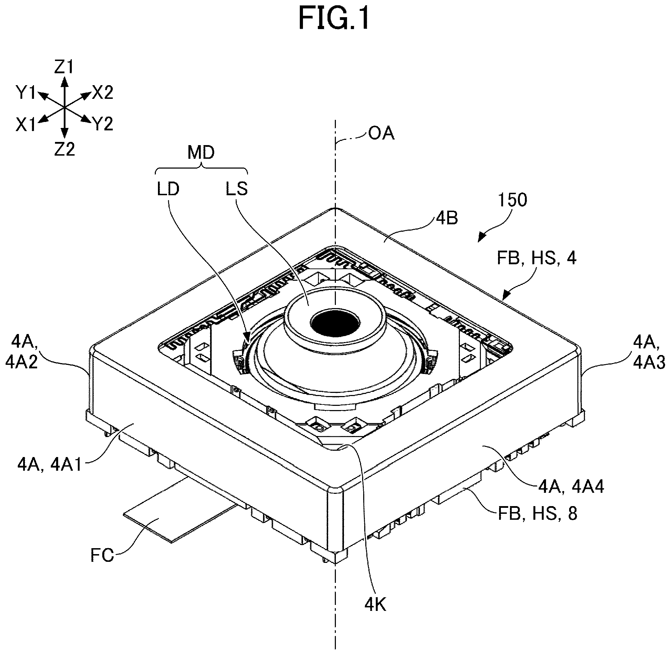

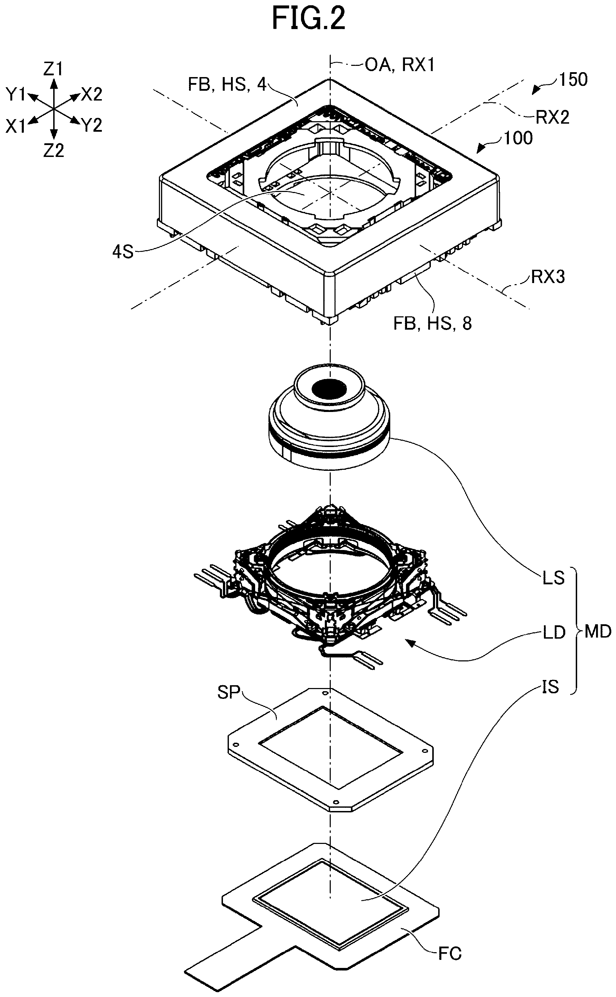

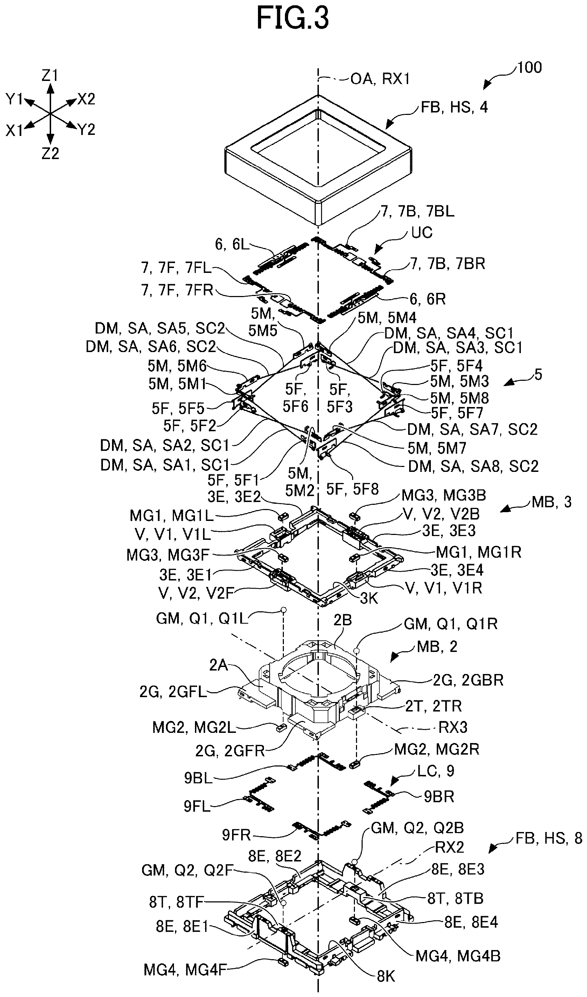

Hereinafter, an optical device 150 according to an embodiment of the present disclosure will be described with reference to the drawings. FIG. 1 is a perspective view of the optical device 150 including a camera module MD, which is an example of an optical module. FIG. 2 is an exploded perspective view of the optical device 150 including a module driving device 100. FIG. 3 is an exploded perspective view of the module driving device 100. In the illustrated example, the module driving device 100 is a camera module-driving device.

In FIG. 1, X1 denotes one direction of an X axis forming a three-dimensional orthogonal coordinate system, and X2 denotes the other direction of the X axis. Y1 denotes one direction of a Y axis forming the three-dimensional orthogonal coordinate system, and Y2 denotes the other direction of the Y axis. Z1 denotes one direction of a Z axis forming the three-dimensional orthogonal coordinate system, and Z2 denotes the other direction of the Z axis. In FIG. 1, an X1 side of the optical device 150 corresponds to a front side (front surface side) of the optical device 150, and an X2 side of the optical device 150 corresponds to a rear side (rear surface side) of the optical device 150. A Y1 side of the optical device 150 corresponds to a left side of the optical device 150, and a Y2 side of the optical device 150 corresponds to a right side of the optical device 150. A Z1 side of the optical device 150 corresponds to an upper side (subject side) of the optical device 150, and a Z2 side of the optical device 150 corresponds to a lower side (imaging element side) of the optical device 150. The same applies to the other members in the other drawings.

As illustrated in FIG. 2, the module driving device 100 forming the optical device 150 includes a cover member 4 that is a part of a fixed-side member FB. The cover member 4 is configured to function as a part of a casing HS configured to cover the members forming the module driving device 100. In the illustrated example, the cover member 4 is formed of a non-magnetic metal. However, the cover member 4 may be formed of a magnetic metal. Specifically, as illustrated in FIG. 2, the cover member 4 has a box-like outer shape defining a housing 4S. The camera module MD is housed in the housing 4S.

In the example illustrated in FIG. 1, the cover member 4 includes: an outer peripheral wall 4A that is rectangular and cylindrical; and an upper plate 4B that is rectangular and flat. The upper plate 4B is provided to be continuous with the upper end (the Z1-side end) of the outer peripheral wall 4A. An opening 4K that is quadrilateral is formed at the center of the upper plate 4B. The outer peripheral wall 4A includes a first side plate 4A1 to a fourth side plate 4A4. The first side plate 4A1 and the third side plate 4A3 face each other, and the second side plate 4A2 and the fourth side plate 4A4 face each other. The first side plate 4A1 and the third side plate 4A3 extend perpendicular to the second side plate 4A2 and the fourth side plate 4A4.

As illustrated in FIG. 1, the cover member 4 is adhesively bonded to a base member 8. The adhesive is, for example, a photocurable adhesive. The photocurable adhesive is, for example, an ultraviolet curable adhesive, a visible light curable adhesive, or the like. The adhesive may be a thermosetting adhesive, a moisture curable adhesive, or the like. The same applies to a below-described adhesive used for bonding one member to another member or for adhesively fixing one member to another member. The base member 8 adhesively bonded to the cover member 4 forms the casing HS together with the cover member 4.

As illustrated in FIG. 2, the camera module MD is an example of the optical module, and is formed by: a lens driving device LD; a lens body LS held by the lens driving device LD; and an imaging element IS fixed to a substrate (flexible substrate FC) so as to face the lens body LS. A spacer SP is fixed to the lens driving device LD, and the flexible substrate FC on which the imaging element IS is mounted is fixed to the spacer SP. In the illustrated example, the spacer SP in the form of a frame is disposed between the lens driving device LD and the flexible substrate FC. The imaging element IS is housed in a space formed between the spacer SP and the flexible substrate FC in a state in which the imaging surface is exposed to the opening of the spacer SP. An IR cut filter may be disposed between the lens body LS and the imaging element IS. In this case, the IR cut filter may be attached to the upper surface of the frame of the spacer SP.

The flexible substrate FC is a flexible substrate on which an interconnect pattern is formed, and the interconnect pattern is for connecting the imaging element IS and a device located outside of the module driving device 100. In the illustrated example, the flexible substrate FC is a flexible printed circuit board configured to repeatedly deform. The imaging element IS may be mounted on a rigid substrate. In this case, the rigid substrate may be connected to the flexible substrate FC and connected to the exterior via the flexible substrate FC. In this configuration, the flexible substrate FC can absorb the movement of the rigid substrate.

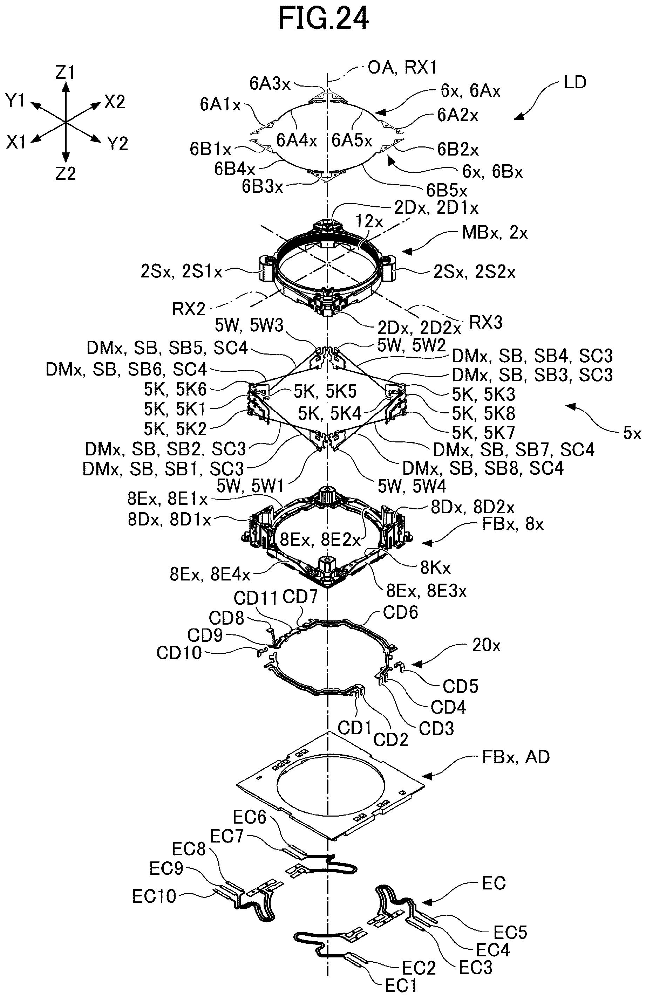

In the illustrated example, the camera module MD is a camera module including a module-side driver DMx (see FIG. 24) of a shape memory alloy wire system. However, the camera module MD may be a camera module including a driver of another system, such as a voice coil motor system including a magnet and a coil, a piezoelectric system, or the like.

Specifically, the module-side driver DMx of the camera module MD is configured to move, on the Z1 side of the imaging element IS, the lens body LS along a Z-axis direction that is the direction of the optical axis of the lens body LS. By moving the lens body LS in this manner, the camera module MD can achieve an autofocus adjustment function, which is one of the lens adjustment functions. Specifically, the camera module MD moves the lens body LS in a direction away from the imaging element IS to enable macro photography, and moves the lens body LS in a direction towards the imaging element IS to enable infinity photography.

The camera module MD may be configured to move the lens body LS in at least one of an X-axis direction or a Y-axis direction. By moving the lens body LS in this manner, the camera module MD may achieve an image stabilization function, which is another one of the lens adjustment functions.

FIG. 1 illustrates the lens body LS and the lens driving device LD in a state in which the camera module MD is in a neutral state (neutral position). When the lens body LS is translatable along the Z-axis direction relative to the casing HS of the module driving device 100, the neutral state of the camera module MD means that the lens body LS is positioned in the middle of a range movable in the Z-axis direction. Typically, in the neutral state of the camera module MD, the lens body LS is positioned in the middle of the range movable in the Z-axis direction. The same applies when the lens body LS is translatable along the X-axis direction and when the lens body LS is translatable along the Y-axis direction. The initial state of the camera module MD, i.e., a state in which no power is supplied to the module-side driver DMx, may be the neutral state.

The camera module MD may be a fixed focus-type camera module. That is, the lens body LS may be disposed so as to be immovable relative to the imaging element IS.

As illustrated in FIG. 3, a driver DM, a module holder 2, a connection member 3, a metal member 5, an upper conductive member UC, a lower conductive member LC, and the like are housed in the casing HS of the module driving device 100.

The driver DM includes shape memory alloy wires SA, which are an example of a shape memory actuator. In the illustrated example, the shape memory alloy wires SA include a first wire SA1 to an eighth wire SA8 having substantially the same length and substantially the same diameter. In response to flowing of a current, the shape memory alloy wires SA increase in temperature and shrink as a result of the increase in temperature. The driver DM can utilize the shrinkage of the shape memory alloy wires SA to move the module holder 2. The shape memory alloy wires SA are configured such that the module holder 2 is moved when one or more of the first wire SA1 to the eighth wire SA8 shrink, and one or more different wires are stretched (extended) in accordance with the movement of the module holder 2. In the illustrated example, the first wire SA1 to the fourth wire SA4 are also referred to as first shape memory alloy wires SC1, and the fifth wire SA5 to the eighth wire SA8 are also referred to as second shape memory alloy wires SC2.

In the illustrated example, the driver DM is configured to achieve three degrees of freedom of movement of the movable-side member MB. The three degrees of freedom of movement include: rotation (revolution) about a first direction (the Z-axis direction) that is the direction of the optical axis; rotation (rocking) about a second direction (the X-axis direction) that is perpendicular to the first direction; and rotation (rocking) about a third direction (the Y-axis direction) that is perpendicular to the first direction and the second direction. The first direction (the Z-axis direction) is a direction parallel to a first rotation axis RX1 that coincides with an optical axis OA of the lens body LS, the second direction (the X-axis direction) is a direction parallel to a second rotation axis RX2, and the third direction (the Y-axis direction) is a direction parallel to a third rotation axis RX3. The axial line of the second rotation axis RX2 is orthogonal to the axial line of the first rotation axis RX1, and the axial line of the third rotation axis RX3 is orthogonal to the axial line of the first rotation axis RX1. The axial line of the second rotation axis RX2 and the axial line of the third rotation axis RX3 are at skew positions and are orthogonal to each other as viewed along the axial line direction of the first rotation axis RX1. However, the axial line of the second rotation axis RX2 and the axial line of the third rotation axis RX3 may be orthogonal to each other in the same plane. That is, the first rotation axis RX1, the second rotation axis RX2, and the third rotation axis RX3 may be rotational axes that are orthogonal to each other. The direction of the optical axis includes a direction of the optical axis OA of the lens body LS and a direction parallel to the optical axis OA. The second rotation axis RX2 is also referred to as a first rocking axis, and the third rotation axis RX3 is also referred to as a second rocking axis.

When the module holder 2 is rotatable about the first rotation axis RX1 relative to the casing HS of the module driving device 100, the neutral state of the module driving device 100 means a state in which the module holder 2 is positioned in the middle of the rotatable range. Typically, in the neutral state of the module driving device 100, the module holder 2 is positioned at the center of the range rotatable about the first rotation axis RX1. The same applies when the module holder 2 is rockable about the second rotation axis RX2 and when the module holder 2 is rockable about the third rotation axis RX3. The initial state of the module driving device 100, i.e., a state in which no power is supplied to the driver DM, may be the neutral state.

Typically, when the module driving device 100 is in the neutral state and the camera module MD is in the neutral state, the imaging plane of the imaging element IS is perpendicular to the optical axis OA of the lens body LS that is disposed to face the imaging element IS. In this case, the center axis of the imaging element IS (the imaging plane) coincides with the optical axis OA of the lens body. The imaging plane of the imaging element IS is a plane parallel to the upper surface that is a subject-side surface of the imaging element IS.

The movable-side member MB is a member configured to be driven by the driver DM. In the illustrated example, the movable-side member MB includes the module holder 2 configured to hold the camera module MD, and the connection member 3 connected to the module holder 2 such that the module holder 2 is rockable. The camera module MD may be included in the movable-side member MB.

The module holder 2 is configured to hold the camera module MD including the lens body LS and the imaging element IS. In the illustrated example, the module holder 2 is formed through injection molding of a synthetic resin, such as a liquid crystal polymer (LCP) or the like. Specifically, as illustrated in FIG. 3, the module holder 2 includes: an outer peripheral wall 2A that is rectangular and cylindrical; an upper plate 2B that is rectangular and flat and is provided so as to be continuous with the upper end (the Z1-side end) of the outer peripheral wall 2A; a flange 2G formed at the four corners of the outer peripheral wall 2A; and an engagement portion 2T configured to be engaged with a corresponding part of another member.

In the illustrated example, the flange 2G includes a left-front flange 2GFL formed at the left-front corner of the module holder 2, a right-front flange 2GFR formed at the right-front corner of the module holder 2, a left-rear flange 2GBL formed at the left-rear corner of the module holder 2, and a right-rear flange 2GBR formed at the right-rear corner of the module holder 2.

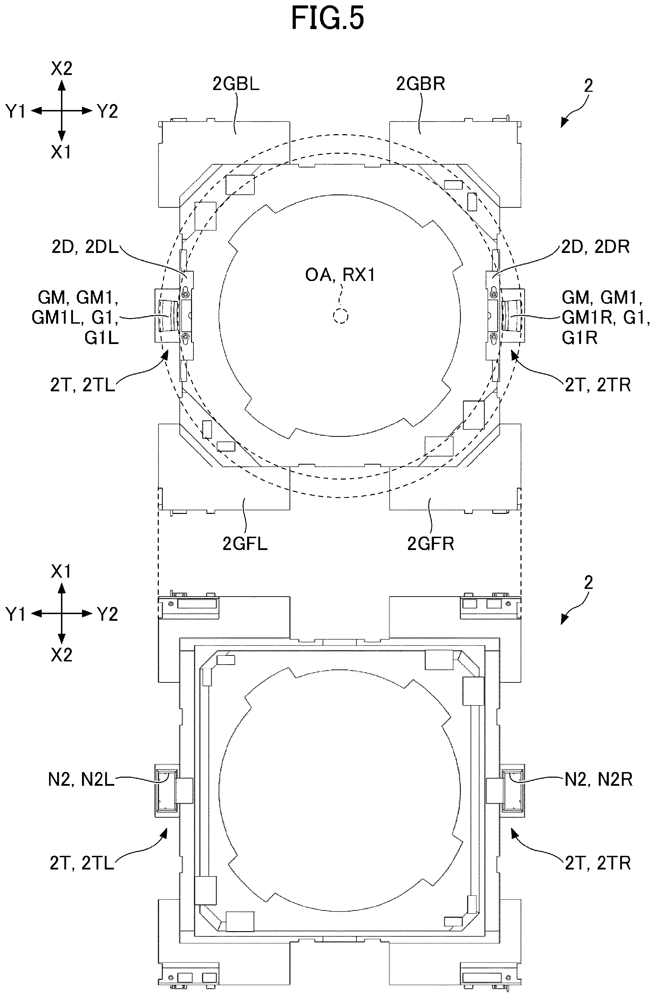

In the illustrated example, the engagement portion 2T is a portion configured to be engaged with a part of the connection member 3. Specifically, the engagement portion 2T includes a left engagement portion 2TL (see FIG. 5) formed to project outward from the left side surface of the outer peripheral wall 2A, and a right engagement portion 2TR formed to project outward from the right side surface of the outer peripheral wall 2A.

In the illustrated example, the module holder 2 is configured to function as a cover member of the camera module MD. Specifically, the lens driving device LD is configured to be adhesively bonded to the lower end of the outer peripheral wall 2A.

The connection member 3 is configured such that the module holder 2 is rockable about the third rotation axis RX3 crossing the direction of the optical axis. In the illustrated example, the connection member 3 is formed through injection molding of a synthetic resin, such as a liquid crystal polymer (LCP) or the like. Specifically, as illustrated in FIG. 3, the connection member 3 includes a rectangular frame that is disposed to enclose a rectangular opening 3K. This frame includes four side portions 3E (first side portion 3E1 to fourth side portion 3E4). The connection member 3 includes an engagement portion V configured to be engaged with a corresponding part of another member.

In the illustrated example, the engagement portion V includes a first engagement portion V1 configured to be engaged with a part of the module holder 2, and a second engagement portion V2 configured to be engaged with a part of the base member 8. Specifically, the first engagement portion V1 includes a first left engagement portion V1L formed at the central portion of the second side portion 3E2, and a first right engagement portion V1R formed at the central portion of the fourth side portion 3E4. The second engagement portion V2 includes a second front engagement portion V2F formed at the central portion of the first side portion 3E1, and a second rear engagement portion V2B formed at the central portion of the third side portion 3E3.

The upper conductive member UC is a flexible conductive member that connects, on the upper side of the movable-side member MB, two members that move relative to each other. In the illustrated example, the upper conductive member UC is formed, for example, by a metal plate that is formed mainly of a copper alloy, a titanium-copper alloy (titanium-copper), a copper-nickel alloy (nickel-tin-copper), or the like.

In the illustrated example, the upper conductive member UC includes a first conductive member 6 connecting the module holder 2 and the connection member 3, and a second conductive member 7 connecting the connection member 3 and the base member 8. The first conductive member 6 includes a left conductive member 6L and a right conductive member 6R. The second conductive member 7 includes a front conductive member 7F and a rear conductive member 7B. The front conductive member 7F includes a left-front conductive member 7FL and a right-front conductive member 7FR, and the rear conductive member 7B includes a left-rear conductive member 7BL and a right-rear conductive member 7BR.

The lower conductive member LC is a flexible conductive member that connects, on the lower side of the movable-side member MB, two members that move relative to each other. The lower conductive member LC is also referred to as a third conductive member 9. In the illustrated example, the third conductive member 9 is formed, for example, by a metal plate that is formed mainly of a copper alloy, a titanium-copper alloy (titanium-copper), a copper-nickel alloy (nickel-tin-copper), or the like. Specifically, the third conductive member 9 includes four conductive members (left-front conductive member 9FL, right-front conductive member 9FR, left-rear conductive member 9BL, and right-rear conductive member 9BR) connecting the module holder 2 and the base member 8.

The base member 8 is formed through injection molding of a synthetic resin, such as a liquid crystal polymer (LCP) or the like. In the illustrated example, the base member 8 has a substantially rectangular outline in a top view and has an opening 8K at the center of the base member 8, as illustrated in FIG. 3. Specifically, the base member 8 includes four side portions 8E (first side portion 8E1 to fourth side portion 8E4) that are disposed to enclose the opening 8K. The base member 8 includes an engagement portion 8T configured to be engaged with a corresponding part of another member.

In the illustrated example, the engagement portion 8T is a portion configured to be engaged with a part of the connection member 3. Specifically, the engagement portion 8T includes a front engagement portion 8TF formed at the central portion of the first side portion 8E1, and a rear engagement portion 8TB formed at the central portion of the third side portion 8E3.

The metal member 5 is configured such that the ends of the shape memory alloy wires SA are fixed to the metal member 5. In the illustrated example, the metal member 5 includes eight lower metal members 5F (first lower terminal plate 5F1 to eighth lower terminal plate 5F8) and eight upper metal members 5M (first upper terminal plate 5M1 to eighth upper terminal plate 5M8), as illustrated in FIG. 3.

Four of the eight lower metal members 5F (the first lower terminal plate 5F1 to the fourth lower terminal plate 5F4) are configured to be fixed to the module holder 2, and the remaining four of the eight lower metal members 5F (the fifth lower terminal plate 5F5 to the eighth lower terminal plate 5F8) are configured to be fixed to the base member 8. The eight upper metal members 5M (the first upper terminal plate 5M1 to the eighth upper terminal plate 5M8) are configured to be fixed to the connection member 3.

The shape memory alloy wires SA are disposed so as to be along the inner surface of the outer peripheral wall 4A of the cover member 4, and are configured to move the movable-side member MB relative to the fixed-side member FB. In the illustrated example, the shape memory alloy wires SA include the first wire SA1 to the eighth wire SA8, and are configured to move the module holder 2, which is the movable-side member MB, relative to the base member 8, which is the fixed-side member FB, as illustrated in FIG. 3. Specifically, as illustrated in FIG. 3, one end of the first wire SA1 to the eighth wire SA8 is fixed to the lower metal members 5F through crimping, welding, or the like, and the other end of the first wire SA1 to the eighth wire SA8 is fixed to the upper metal members 5M through crimping, welding, or the like.

A first rotating body Q1 is a rotating body disposed between the module holder 2 and the connection member 3, and a second rotating body Q2 is a rotating body disposed between the connection member 3 and the base member 8. In the illustrated example, the first rotating body Q1 and the second rotating body Q2 are balls (spherical bodies) formed of a magnetic material (magnetic metal). However, the first rotating body Q1 and the second rotating body Q2 may be formed of a non-magnetic material, such as a plastic, a non-magnetic metal, a ceramic, or the like. The first rotating body Q1 and the second rotating body Q2 may be a cylindrical body or the like other than the spherical body.

Specifically, the first rotating body Q1 includes a first left-side rotating body Q1L and a first right-side rotating body Q1R that are disposed in the Y-axis direction so as to face each other across the optical axis OA. A line connecting the center of the first left-side rotating body Q1L and the center of the first right-side rotating body Q1R forms the axial line of the third rotation axis RX3. The second rotating body Q2 includes a second front-side rotating body Q2F and a second rear-side rotating body Q2B that are disposed in the X-axis direction so as to face each other across the optical axis OA. A line connecting the center of the second front-side rotating body Q2F and the center of the second rear-side rotating body Q2B forms the axial line of the second rotation axis RX2.

A first magnet MG1 and a second magnet MG2 are disposed such that the module holder 2 and the connection member 3 can attract each other via the first rotating body Q1. In the illustrated example, the first magnet MG1 is attached to the upper surface of the connection member 3, and the second magnet MG2 is attached to the lower surface of the module holder 2.

The first magnet MG1 and the second magnet MG2 are a permanent magnet having a rectangular parallelepiped shape, and are bipolar in the Z-axis direction. In the illustrated example, the upper portions of the first magnet MG1 and the second magnet MG2 are magnetized to the N pole and the lower portions of the first magnet MG1 and the second magnet MG2 are magnetized to the S pole such that the S pole of the first magnet MG1 and the N pole of the second magnet MG2 face each other in the Z-axis direction via the first rotating body Q1.

More specifically, the first magnet MG1 includes a first left magnet MG1L that is adhesively fixed to the upper portion of the first left engagement portion V1L located at the central portion of the second side portion 3E2 of the connection member 3, and a first right magnet MG1R that is adhesively fixed to the upper portion of the first right engagement portion V1R located at the central portion of the fourth side portion 3E4 of the connection member 3. The second magnet MG2 includes a second left magnet MG2L that is adhesively fixed to the lower portion of the left engagement portion 2TL located at the left side surface of the outer peripheral wall 2A of the module holder 2, and a second right magnet MG2R that is adhesively fixed to the lower portion of the right engagement portion 2TR located at the right side surface of the outer peripheral wall 2A of the module holder 2.

The third magnet MG3 and the fourth magnet MG4 are disposed such that the connection member 3 and the base member 8 can attract each other via the second rotating body Q2. In the illustrated example, the third magnet MG3 is attached to the upper portion of the connection member 3, and the fourth magnet MG4 is attached to the lower portion of the base member 8.

The third magnet MG3 and the fourth magnet MG4 are a permanent magnet having a rectangular parallelepiped shape, and are bipolar in the Z-axis direction. In the illustrated example, the upper portions of the third magnet MG3 and the fourth magnet MG4 are magnetized to the N pole and the lower portions of the third magnet MG3 and the fourth magnet MG4 are magnetized to the S pole such that the S pole of the third magnet MG3 and the N pole of the fourth magnet MG4 face each other in the Z-axis direction via the second rotating body Q2.

More specifically, the third magnet MG3 includes a third front magnet MG3F that is adhesively fixed to the upper portion of the second front engagement portion V2F located at the central portion of the first side portion 3E1 of the connection member 3, and a third rear magnet MG3B that is adhesively fixed to the upper portion of the second rear engagement portion V2B located at the central portion of the third side portion 3E3 of the connection member 3. The fourth magnet MG4 includes a fourth front magnet MG4F that is adhesively fixed to the lower portion of the front engagement portion 8TF located at the central portion of the first side portion 8E1 of the base member 8, and a fourth rear magnet MG4B that is adhesively fixed to the lower portion of the rear engagement portion 8TB located at the central portion of the third side portion 8E3 of the base member 8.

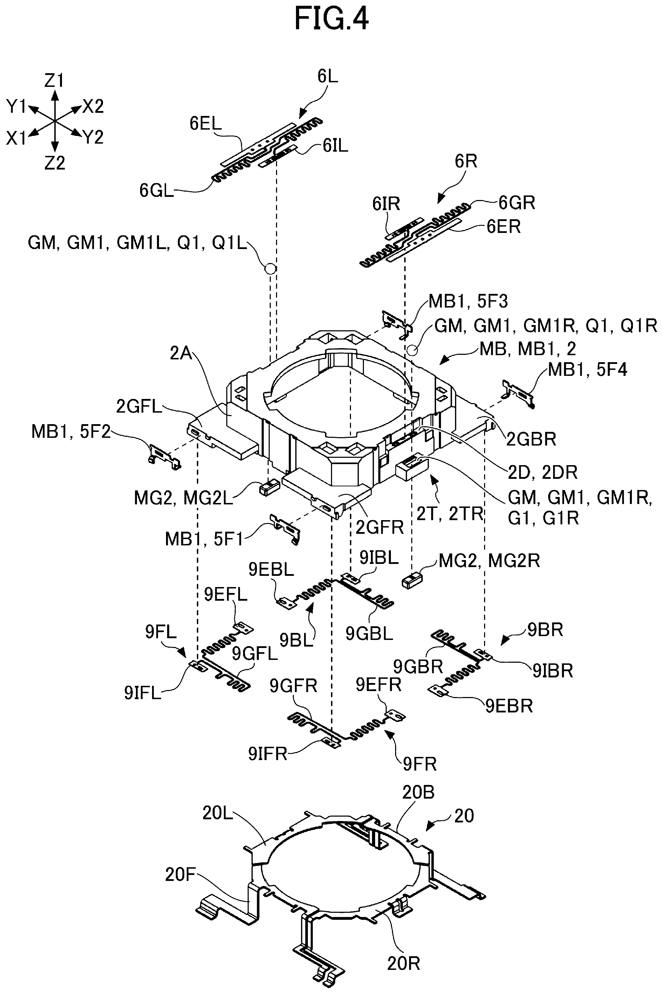

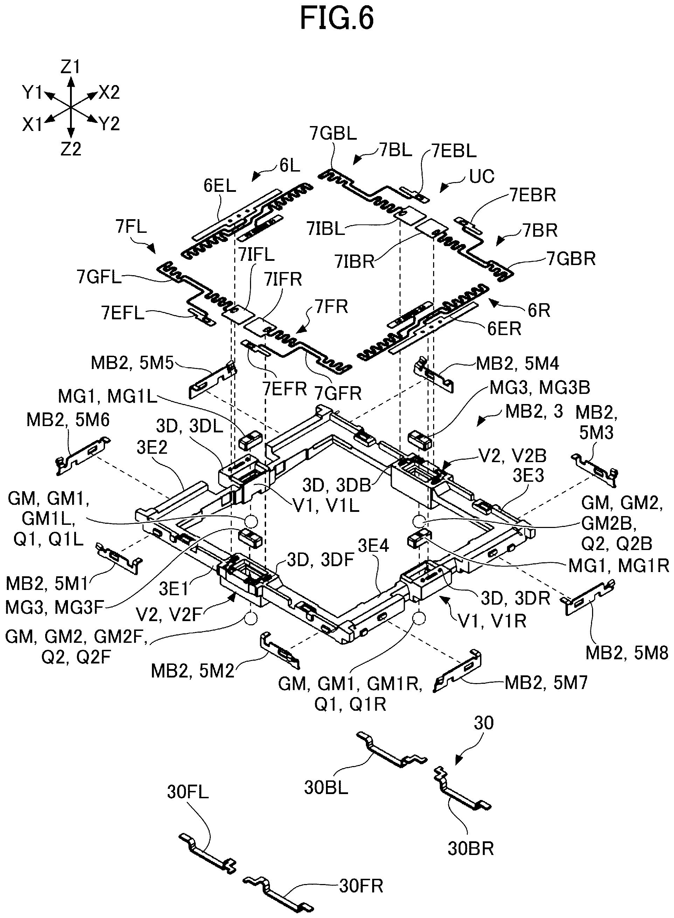

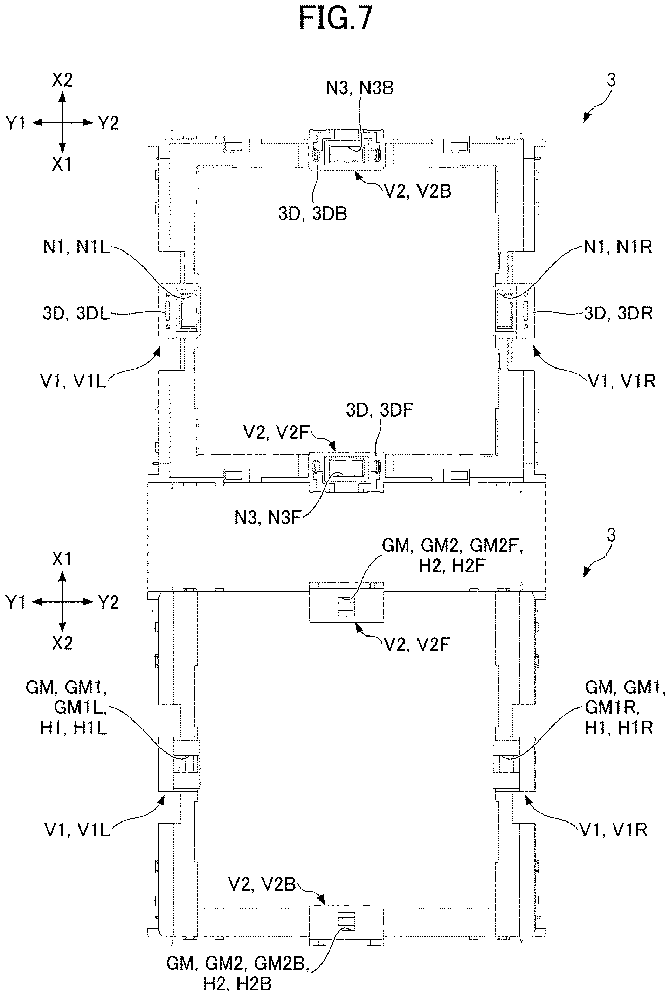

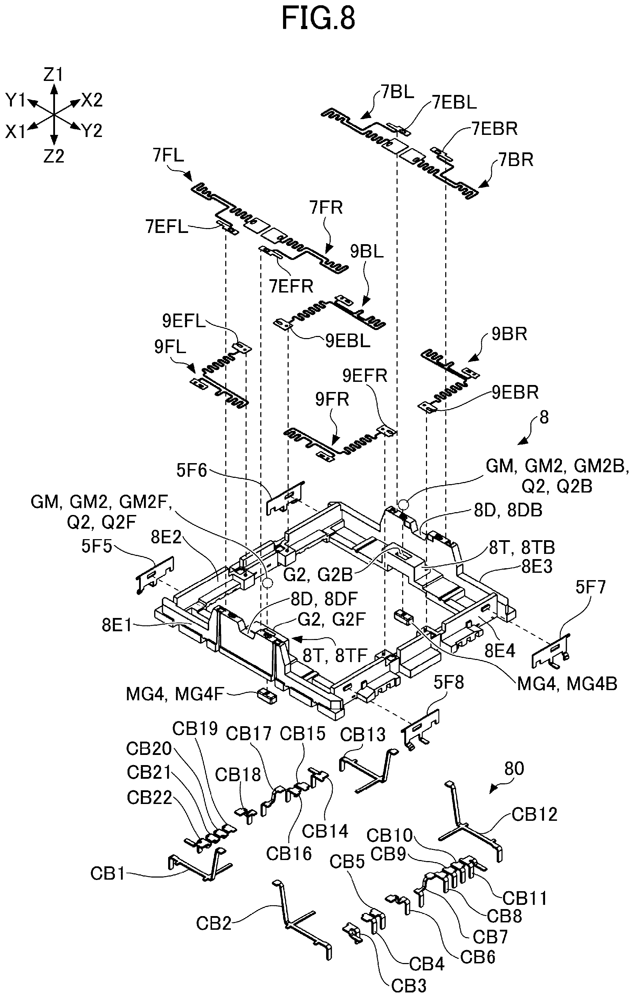

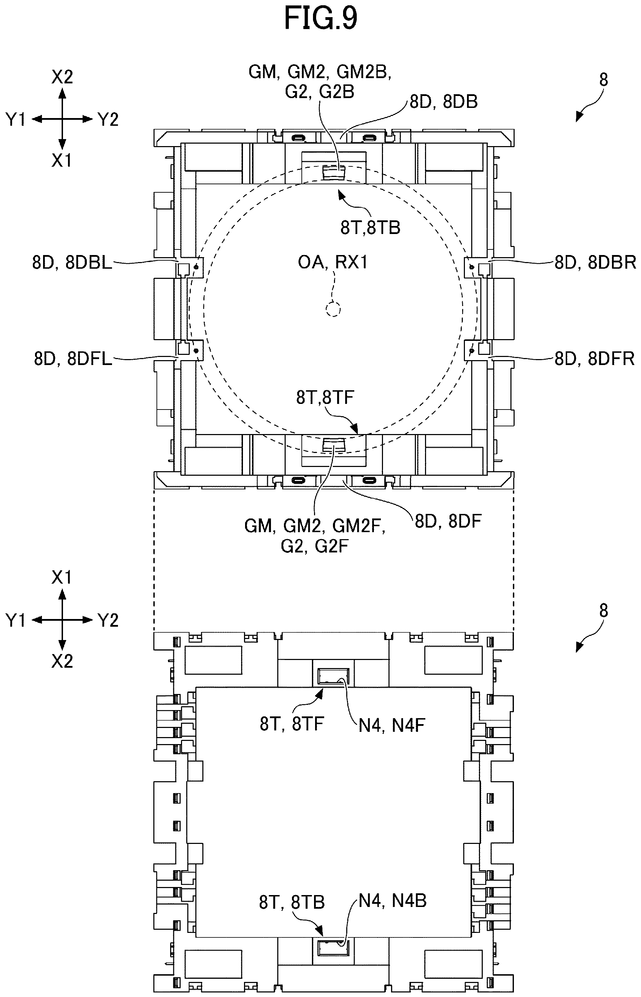

Next, details of the module holder 2, the connection member 3, and the base member 8 that form the module driving device 100 will be described with reference to FIGS. 4 to 9. FIG. 4 is a perspective view of the module holder 2 to which various members are attached. FIG. 5 is a view illustrating the top surface and the bottom surface of the module holder 2. FIG. 6 is a perspective view of the connection member 3 to which various members are attached. FIG. 7 is a view illustrating the top surface and the bottom surface of the connection member 3. FIG. 8 is a perspective view of the base member 8 to which various members are attached. FIG. 9 is a view illustrating the top surface and the bottom surface of the base member 8.

In the module holder 2 illustrated in FIG. 4, the first lower terminal plate 5F1 is fixed to the front surface of the right-front flange 2GFR of the module holder 2, the second lower terminal plate 5F2 is fixed to the front surface of the left-front flange 2GFL of the module holder 2, the third lower terminal plate 5F3 is fixed to the rear surface of the left-rear flange 2GBL (see FIG. 5) of the module holder 2, and the fourth lower terminal plate 5F4 is fixed to the rear surface of the right-rear flange 2GBR of the module holder 2. The first lower terminal plate 5F1 to the fourth lower terminal plate 5F4 attached to the module holder 2 form a first movable portion MB1 together with the module holder 2. The first lower terminal plate 5F1 to the fourth lower terminal plate 5F4 are adhesively fixed to the flange 2G.

As illustrated in FIG. 4, the left conductive member 6L includes: an inner fixed portion 6IL fixed to the module holder 2; an outer fixed portion 6EL fixed to the connection member 3; and an elastic portion 6GL connecting the inner fixed portion 6IL and the outer fixed portion 6EL. The right conductive member 6R includes: an inner fixed portion 6IR fixed to the module holder 2; an outer fixed portion 6ER fixed to the connection member 3; and an elastic portion 6GR connecting the inner fixed portion 6IR and the outer fixed portion 6ER.

Specifically, the inner fixed portion 6IR is placed on the upper end surface of a right base portion 2DR formed at the right side surface of the outer peripheral wall 2A of the module holder 2, and is adhesively fixed to the right base portion 2DR. The inner fixed portion 6IL is placed on the upper end surface of a left base portion 2DL (see FIG. 5) formed at the left side surface of the outer peripheral wall 2A of the module holder 2, and is adhesively fixed to the left base portion 2DL.

As illustrated in FIG. 4, the left-front conductive member 9FL includes: an inner fixed portion 9IFL fixed to the module holder 2; an outer fixed portion 9EFL fixed to the base member 8; and an elastic portion 9GFL connecting the inner fixed portion 9IFL and the outer fixed portion 9EFL. The right-front conductive member 9FR includes: an inner fixed portion 9IFR fixed to the module holder 2; an outer fixed portion 9EFR fixed to the base member 8; and an elastic portion 9GFR connecting the inner fixed portion 9IFR and the outer fixed portion 9EFR. The left-rear conductive member 9BL includes: an inner fixed portion 9IBL fixed to the module holder 2; an outer fixed portion 9EBL fixed to the base member 8; and an elastic portion 9GBL connecting the inner fixed portion 9IBL and the outer fixed portion 9EBL. The right-rear conductive member 9BR includes: an inner fixed portion 9IBR fixed to the module holder 2; an outer fixed portion 9EBR fixed to the base member 8; and an elastic portion 9GBR connecting the inner fixed portion 9IBR and the outer fixed portion 9EBR.

Specifically, the inner fixed portion 9IFL is adhesively fixed to the lower surface of the left-front flange 2GFL, the inner fixed portion 9IFR is adhesively fixed to the lower surface of the right-front flange 2GFR, the inner fixed portion 9IBL is adhesively fixed to the lower surface of the left-rear flange 2GBL, and the inner fixed portion 9IBR is adhesively fixed to the lower surface of the right-rear flange 2GBR.

As illustrated in FIGS. 4 and 5, a first groove G1 configured to receive the first rotating body Q1 is formed at the upper end surface of the engagement portion 2T of the module holder 2. The first groove G1 is a groove having a shape of an arc extending along the circumference of a circle centered on the optical axis OA. Specifically, as illustrated in FIG. 5, the first groove G1 includes a first left groove G1L formed at the upper surface of the left engagement portion 2TL, and a first right groove G1R formed at the upper surface of the right engagement portion 2TR. The first left groove G1L is formed so as to receive the first left-side rotating body Q1L, and the first right groove G1R is formed so as to receive the first right-side rotating body Q1R. In FIG. 5, an annular region between two concentric circles centered on the optical axis OA is shown with a dashed line, and the first left groove G1L and the first right groove G1R are a part of the annular region. In this manner, the first groove G1 is formed such that the module holder 2 and the connection member 3, connected via the first rotating body Q1, are rotatable relative to each other about the optical axis OA.

As illustrated in FIGS. 4 and 5, a second housing N2 configured to receive the second magnet MG2 is formed at the lower end surface of the engagement portion 2T of the module holder 2. The second housing N2 is a rectangular parallelepiped recess formed so as to extend along the side surface of the outer peripheral wall 2A. Specifically, as illustrated in FIG. 5, the second housing N2 includes a second left housing N2L formed at the lower surface of the left engagement portion 2TL, and a second right housing N2R formed at the lower surface of the right engagement portion 2TR. The second left housing N2L is formed so as to receive the second left magnet MG2L, and the second right housing N2R is formed so as to receive the second right magnet MG2R.

As illustrated in FIG. 4, the module holder 2 is configured such that a first embedded current-conducting member 20 is embedded in the module holder 2. In the illustrated example, the first embedded current-conducting member 20 is a member used for conducting a current through the first shape memory alloy wires SC1 and the second shape memory alloy wires SC2, and is embedded in the module holder 2 through insert molding. Specifically, the first embedded current-conducting member 20 includes four members independent of each other (rear current-conducting member 20B, front current-conducting member 20F, left current-conducting member 20L, and right current-conducting member 20R).

In the connection member 3 illustrated in FIG. 6, the first upper terminal plate 5M1 is fixed to the left portion of the front surface of the first side portion 3E1 of the connection member 3, the second upper terminal plate 5M2 is fixed to the right portion of the front surface of the first side portion 3E1 of the connection member 3, the third upper terminal plate 5M3 is fixed to the right portion of the rear surface of the third side portion 3E3 of the connection member 3, and the fourth upper terminal plate 5M4 is fixed to the left portion of the rear surface of the third side portion 3E3 of the connection member 3. The fifth upper terminal plate 5M5 is fixed to the rear portion of the left side surface of the second side portion 3E2 of the connection member 3, the sixth upper terminal plate 5M6 is fixed to the front portion of the left side surface of the second side portion 3E2 of the connection member 3, the seventh upper terminal plate 5M7 is fixed to the front portion of the right side surface of the fourth side portion 3E4 of the connection member 3, and the eighth upper terminal plate 5M8 is fixed to the rear portion of the right side surface of the fourth side portion 3E4 of the connection member 3. The first upper terminal plate 5M1 to the eighth upper terminal plate 5M8 attached to the connection member 3 form a second movable portion MB2 together with the connection member 3. The first upper terminal plate 5M1 to the eighth upper terminal plate 5M8 are adhesively fixed to the connection member 3.

As illustrated in FIG. 6, the outer fixed portion 6ER of the right conductive member 6R is placed on the upper end surface of the right base portion 3DR formed at the central portion of the fourth side portion 3E4 of the connection member 3, and is adhesively fixed to the right base portion 3DR. The outer fixed portion 6EL of the left conductive member 6L is placed on the upper end surface of the left base portion 3DL formed at the central portion of the second side portion 3E2 of the connection member 3, and is adhesively fixed to the left base portion 3DL.

As illustrated in FIG. 6, the left-front conductive member 7FL includes: an inner fixed portion 7IFL fixed to the connection member 3; an outer fixed portion 7EFL fixed to the base member 8; and an elastic portion 7GFL connecting the inner fixed portion 7IFL and the outer fixed portion 7EFL. The right-front conductive member 7FR includes: an inner fixed portion 7IFR fixed to the connection member 3; an outer fixed portion 7EFR fixed to the base member 8; and an elastic portion 7GFR connecting the inner fixed portion 7IFR and the outer fixed portion 7EFR. The left-rear conductive member 7BL includes: an inner fixed portion 7IBL fixed to the connection member 3; an outer fixed portion 7EBL fixed to the base member 8; and an elastic portion 7GBL connecting the inner fixed portion 7IBL and the outer fixed portion 7EBL. The right-rear conductive member 7BR includes: an inner fixed portion 7IBR fixed to the connection member 3; an outer fixed portion 7EBR fixed to the base member 8; and an elastic portion 7GBR connecting the inner fixed portion 7IBR and the outer fixed portion 7EBR.

Specifically, the inner fixed portion 7IFL and the inner fixed portion 7IFR are placed on the upper end surface of a front base portion 3DF formed at the central portion of the first side portion 3E1 of the connection member 3, and are adhesively fixed to the front base portion 3DF. The inner fixed portion 7IBL and the inner fixed portion 7IBR are placed on the upper end surface of a rear base portion 3DB formed at the central portion of the third side portion 3E3 of the connection member 3, and are adhesively fixed to the rear base portion 3DB.

As illustrated in FIGS. 6 and 7, a first recess H1 configured to hold the first rotating body Q1 is formed at the lower end surface of the first engagement portion V1 of the connection member 3. The first recess H1 is a recess configured to restrict (maintain) the position of the first rotating body Q1, i.e., a recess configured such that the first rotating body Q1 can slide and rotate at the current position without changing in position by rolling. Specifically, as illustrated in FIG. 7, the first recess H1 includes a first left recess H1L formed at the lower surface of the first left engagement portion V1L, and a first right recess H1R formed at the lower surface of the first right engagement portion V1R. The first left recess H1L is formed so as to receive the first left-side rotating body Q1L, and the first right recess H1R is formed so as to receive the first right-side rotating body Q1R.

The first recess H1 is configured such that the optical axis OA is positioned on a straight line connecting the center of the first left-side rotating body Q1L held by the first left recess H1L and the center of the first right-side rotating body Q1R held by the first right recess H1R. The circumferential length of the first recess H1 is shorter than the circumferential length of the first groove G1. The first recess H1 does not need to have a shape of an arc centered on the optical axis OA in a plan view (bottom view). The first recess H1 may have any shape, such as, for example, a shape extending in a straight line in the tangential direction of a circle centered on the optical axis OA, as illustrated in FIG. 7.

As illustrated in FIGS. 6 and 7, a second recess H2 configured to hold the second rotating body Q2 is formed at the lower end surface of the second engagement portion V2 of the connection member 3. The second recess H2 is a recess configured to restrict (maintain) the position of the second rotating body Q2, i.e., a recess configured such that the second rotating body Q2 can slide and rotate at the current position without changing in position by rolling. Specifically, as illustrated in FIG. 7, the second recess H2 includes a second front recess H2F formed at the lower surface of the second front engagement portion V2F, and a second rear recess H2B formed at the lower surface of the second rear engagement portion V2B. The second front recess H2F is formed so as to receive the second front-side rotating body Q2F, and the second rear recess H2B is formed so as to receive the second rear-side rotating body Q2B.

The second recess H2 is configured such that the optical axis OA is positioned on a straight line connecting the center of the second rear-side rotating body Q2B held by the second rear recess H2B and the center of the second front-side rotating body Q2F held by the second front recess H2F. The circumferential length of the second recess H2 is shorter than the circumferential length of the second groove G2. The second recess H2 does not need to have a shape of an arc centered on the optical axis OA in a plan view (bottom view). The second recess H2 may have any shape, such as, for example, a shape extending in a straight line in the tangential direction of a circle centered on the optical axis OA, as illustrated in FIG. 7.

As illustrated in FIGS. 6 and 7, a first housing N1 configured to receive the first magnet MG1 is formed at the upper end surface of the first engagement portion V1 of the connection member 3. The first housing N1 is a rectangular parallelepiped recess that is formed so as to extend along the side portion 3E. Specifically, as illustrated in FIG. 7, the first housing N1 includes a first left housing N1L formed at the upper surface of the first left engagement portion V1L, and a first right housing N1R formed at the upper surface of the first right engagement portion V1R. The first left housing N1L is formed so as to receive the first left magnet MG1L, and the first right housing N1R is formed so as to receive the first right magnet MG1R.

As illustrated in FIGS. 6 and 7, a third housing N3 configured to house the third magnet MG3 is formed at the upper end surface of the second engagement portion V2 of the connection member 3. The third housing N3 is a rectangular parallelepiped recess that is formed so as to extend along the side portion 3E. Specifically, as illustrated in FIG. 7, the third housing N3 includes a third front housing N3F formed at the upper surface of the second front engagement portion V2F, and a third rear housing N3B formed at the upper surface of the second rear engagement portion V2B. The third front housing N3F is formed so as to receive the third front magnet MG3F, and the third rear housing N3B is formed so as to receive the third rear magnet MG3B.

As illustrated in FIG. 6, the connection member 3 is formed such that a second embedded current-conducting member 30 is embedded in the connection member 3. In the illustrated example, the second embedded current-conducting member 30 is a member used for conducting a current through the first shape memory alloy wires SC1, and is embedded in the connection member 3 through insert molding. More specifically, the second embedded current-conducting member 30 includes four members independent of each other (left-rear current-conducting member 30BL, right-rear current-conducting member 30BR, left-front current-conducting member 30FL, and right-front current-conducting member 30FR).

In the base member 8 illustrated in FIG. 8, the fifth lower terminal plate 5F5 is fixed to the front portion of the left side surface of the second side portion 8E2 of the base member 8, the sixth lower terminal plate 5F6 is fixed to the rear portion of the left side surface of the second side portion 8E2 of the base member 8, the seventh lower terminal plate 5F7 is fixed to the rear portion of the right side surface of the fourth side portion 8E4 of the base member 8, and the eighth lower terminal plate 5F8 is fixed to the front portion of the right side surface of the fourth side portion 8E4 of the base member 8. The fifth lower terminal plate 5F5 to the eighth lower terminal plate 5F8 are adhesively fixed to the base member 8.

As illustrated in FIG. 8, the outer fixed portion 7EFL of the left-front conductive member 7FL and the outer fixed portion 7EFR of the right-front conductive member 7FR are placed on the upper end surface of a front base portion 8DF formed at the central portion of the first side portion 8E1 of the base member 8, and are adhesively fixed to the front base portion 8DF. The outer fixed portion 7EBL of the left-rear conductive member 7BL and the outer fixed portion 7EBR of the right-rear conductive member 7BR are placed on the upper end surface of a rear base portion 8DB formed at the central portion of the third side portion 8E3 of the base member 8, and are adhesively fixed to the rear base portion 8DB.

As illustrated in FIGS. 8 and 9, the outer fixed portion 9EFL of the left-front conductive member 9FL is placed on the upper end surface of a left-front base portion 8DFL formed at the central portion of the second side portion 8E2 of the base member 8, and is adhesively fixed to the left-front base portion 8DFL. The outer fixed portion 9EBL of the left-rear conductive member 9BL is placed on the upper end surface of a left-rear base portion 8DBL formed at the central portion of the second side portion 8E2 of the base member 8, and is adhesively fixed to the left-rear base portion 8DBL. The outer fixed portion 9EFR of the right-front conductive member 9FR is placed on the upper end surface of a right-front base portion 8DFR formed at the central portion of the fourth side portion 8E4 of the base member 8, and is adhesively fixed to the right-front base portion 8DFR. The outer fixed portion 9EBR of the right-rear conductive member 9BR is placed on the upper end surface of a right-rear base portion 8DBR formed at the central portion of the fourth side portion 8E4 of the base member 8, and is adhesively fixed to the right-rear base portion 8DBR.

As illustrated in FIGS. 8 and 9, the second groove G2 configured to receive the second rotating body Q2 is formed at the upper end surface of the engagement portion 8T of the base member 8. The second groove G2 is groove having a shape of an arc extending along the circumference of a circle centered on the optical axis OA. Specifically, as illustrated in FIG. 9, the second groove G2 includes a second front groove G2F formed at the upper surface of the front engagement portion 8TF, and a second rear groove G2B formed at the upper surface of the rear engagement portion 8TB. The second front groove G2F is formed so as to receive the second front-side rotating body Q2F, and the second rear groove G2B is formed so as to receive the second rear-side rotating body Q2B. In FIG. 9, an annular region between two concentric circles centered on the optical axis OA is shown with a dashed line, and the second front groove G2F and the second rear groove G2B are a part of the annular region. In this manner, the second groove G2 is formed such that the connection member 3, connected via the second rotating body Q2, and the base member 8 are rotatable relative to each other about the optical axis OA.

As illustrated in FIGS. 8 and 9, a fourth housing N4 configured to receive the fourth magnet MG4 is formed at the lower end surface of the engagement portion 8T of the base member 8. The fourth housing N4 is a rectangular parallelepiped recess formed so as to extend along the side portion 8E. Specifically, as illustrated in FIG. 9, the fourth housing N4 includes a fourth front housing N4F formed at the lower surface of the front engagement portion 8TF, and a fourth rear housing N4B formed at the lower surface of the rear engagement portion 8TB. The fourth front housing N4F is formed so as to receive the fourth front magnet MG4F, and the fourth rear housing N4B is formed so as to receive the fourth rear magnet MG4B.

As illustrated in FIG. 8, the base member 8 is configured such that a third embedded current-conducting member 80 is embedded in the base member 8. In the illustrated example, the third embedded current-conducting member 80 is a member used for conducting a current through the first shape memory alloy wires SC1 and the second shape memory alloy wires SC2, and is embedded in the base member 8 through insert molding. Specifically, the third embedded current-conducting member 80 includes twenty-two members independent of each other (first current-conducting member CB1 to 22^{nd} current-conducting member CB22).

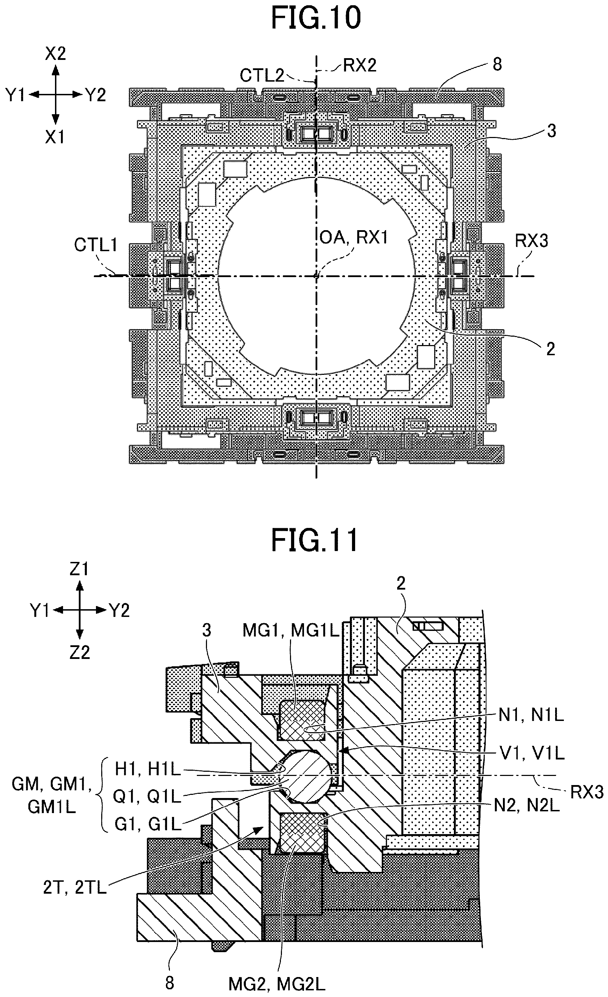

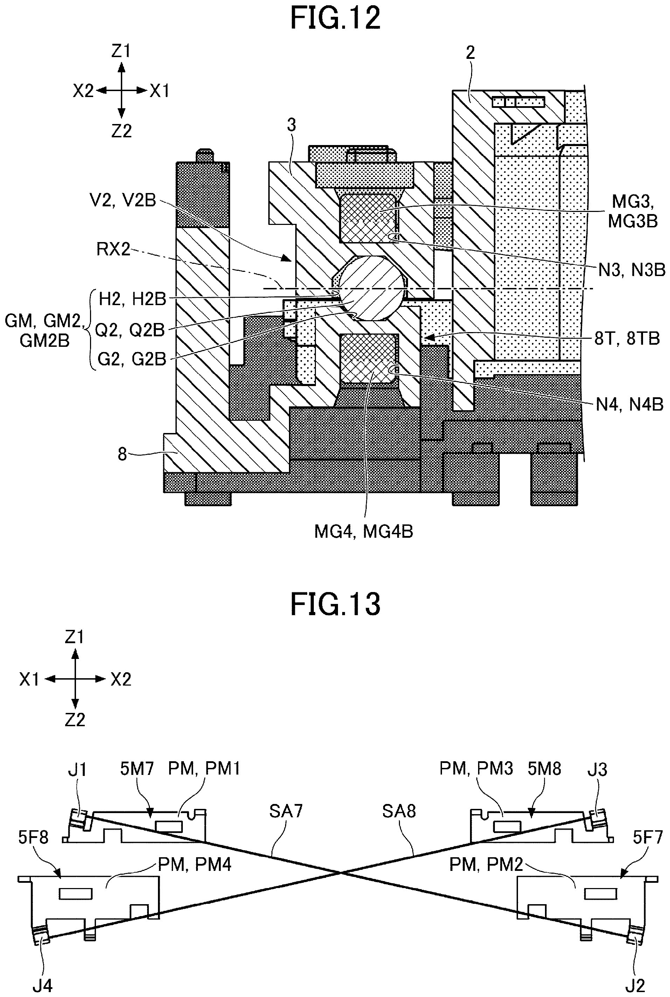

Next, a guide mechanism GM will be described with reference to FIGS. 10 to 12. FIG. 10 is a top view of the module holder 2, the connection member 3, and the base member 8 that are assembled together, and FIGS. 11 and 12 are cross-sectional views of the module holder 2, the connection member 3, and the base member 8 that are assembled together. Specifically, FIG. 11 illustrates a cross section of the module holder 2, the connection member 3, and the base member 8 in a plane parallel to a YZ plane including a cut line CTL1 illustrated in FIG. 10, and FIG. 12 illustrates a cross section of the module holder 2, the connection member 3, and the base member 8 in a plane parallel to an XZ plane including a cut line CTL2 illustrated in FIG. 10. In FIGS. 10 to 12, for ease of understanding, the module holder 2 is provided with a rough dot pattern, the connection member 3 is provided with a fine dot pattern, and the base member 8 is provided with a finer dot pattern. In FIGS. 11 and 12, for ease of understanding, the N-pole portion of the magnet is provided with a fine cross pattern, and the S-pole portion of the magnet is provided with a rough cross pattern.

The guide mechanism GM is a mechanism configured to guide the rotation of the module holder 2 about the optical axis OA. In the illustrated example, the guide mechanism GM includes a first guide mechanism GM1 configured to guide the rotation of the module holder 2 about the optical axis OA relative to the connection member 3, and a second guide mechanism GM2 configured to guide the rotation of the connection member 3 (including the module holder 2 connected to the connection member 3) about the optical axis OA relative to the base member 8.

As illustrated in FIG. 11, the first guide mechanism GM1 includes the first groove G1 formed at the upper end surface of the engagement portion 2T of the module holder 2, the first recess H1 formed at the lower end surface of the first engagement portion V1 of the connection member 3, and the first rotating body Q1. Specifically, the first guide mechanism GM1 includes a first left guide mechanism GM1L and a first right guide mechanism GM1R. The first left guide mechanism GM1L includes the first left groove G1L formed at the upper end surface of the left engagement portion 2TL, the first left recess H1L formed at the lower end surface of the first left engagement portion V1L, and the first left-side rotating body Q1L. The first right guide mechanism GM1R includes the first right groove G1R formed at the upper end surface of the right engagement portion 2TR, the first right recess H1R formed at the lower end surface of the first right engagement portion V1R, and the first right-side rotating body Q1R.

In the first left guide mechanism GM1L, the upper portion of the first left-side rotating body Q1L is received by the first left recess H1L, and the lower portion of the first left-side rotating body Q1L is received by the first left groove G1L, as illustrated in FIG. 11. In the illustrated example, the first left-side rotating body Q1L is disposed in the first left groove G1L so as to be able to roll in the first left groove G1L along the circumference of a circle centered on the optical axis OA, and is disposed in the first left recess H1L so as to slide and rotate in the first left recess H1L (so as not to roll in the first left recess H1L). Therefore, the first left guide mechanism GM1L can guide the rotation of the module holder 2 about the first rotation axis RX1 (the optical axis OA) relative to the connection member **3.** The same applies to the first right guide mechanism GM1R.

The S-pole portion of the first left magnet MG1L housed in the first left housing N1L formed at the upper surface of the first left engagement portion V1L and the N-pole portion of the second left magnet MG2L housed in the second left housing N2L formed at the lower surface of the left engagement portion 2TL are disposed so as to face each other across the first left-side rotating body Q1L. The same applies to the first right magnet MG1R and the second right magnet MG2R. Therefore, the first guide mechanism GM1 can maintain a state in which the module holder 2 and the connection member 3 attract each other even while the module holder 2 is rotating relative to the connection member 3, and can substantially prevent or prevent the module holder 2 and the connection member 3 from separating from each other. Therefore, the first guide mechanism GM1 can substantially prevent or prevent the module holder 2 from accidentally tilting relative to the connection member 3.

As illustrated in FIG. 12, the second guide mechanism GM2 includes the second groove G2 formed at the upper end surface of the engagement portion 8T of the base member 8, the second recess H2 formed at the lower end surface of the second engagement portion V2 of the connection member 3, and the second rotating body Q2. Specifically, the second guide mechanism GM2 includes a second front guide mechanism GM2F and a second rear guide mechanism GM2B. The second front guide mechanism GM2F includes the second front groove G2F formed at the upper end surface of the front engagement portion 8TF, the second front recess H2F formed at the lower end surface of the second front engagement portion V2F, and the second front-side rotating body Q2F. The second rear guide mechanism GM2B includes the second rear groove G2B formed at the upper end surface of the rear engagement portion 8TB, the second rear recess H2B formed at the lower end surface of the second rear engagement portion V2B, and the second rear-side rotating body Q2B.

In the second rear guide mechanism GM2B, the upper portion of the second rear-side rotating body Q2B is received by the second rear recess H2B, and the lower portion of the second rear-side rotating body Q2B is received by the second rear groove G2B, as illustrated in FIG. 12. In the illustrated example, the second rear-side rotating body Q2B is disposed in the second rear groove G2B so as to be able to roll in the second rear groove G2B along the circumference of a circle centered on the optical axis OA, and is disposed in the second rear recess H2B so as to slide and rotate in the second rear recess H2B (so as not to roll in the second rear recess H2B). Therefore, the second rear guide mechanism GM2B can guide the rotation of the connection member 3 (including the module holder 2) about the first rotation axis RX1 (the optical axis OA) relative to the base member 8. The same applies to the second front guide mechanism GM2F.

The S-pole portion of the third rear magnet MG3B housed in the third rear housing N3B formed at the upper surface of the second rear engagement portion V2B and the N-pole portion of the fourth rear magnet MG4B housed in the fourth rear housing N4B formed at the lower surface of the rear engagement portion 8TB are disposed so as to face each other across the second rear-side rotating body Q2B. The same applies to the third front magnet MG3F and the fourth front magnet MG4F. Therefore, the second guide mechanism GM2 can maintain a state in which the base member 8 and the connection member 3 attract each other even while the connection member 3 (including the module holder 2) is rotating relative to the base member 8, and can substantially prevent or prevent the base member 8 and the connection member 3 from separating from each other. Therefore, the second guide mechanism GM2 can substantially prevent or prevent the connection member 3 (including the module holder 2) from accidentally tilting relative to the base member 8.

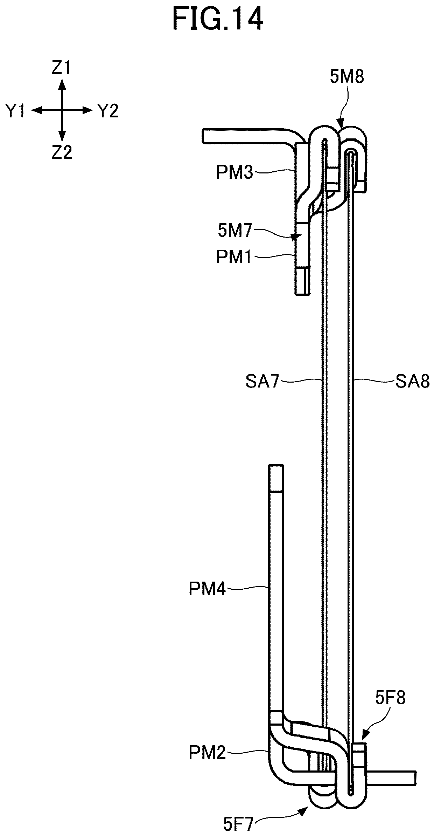

Next, the metal member 5 to which the shape memory alloy wires SA are to be attached will be described with reference to FIGS. 13 and 14. FIG. 13 is a view of the seventh wire SA7 attached to the seventh upper terminal plate 5M7 and the seventh lower terminal plate 5F7, and the eighth wire SA8 attached to the eighth upper terminal plate 5M8 and the eighth lower terminal plate 5F8, as viewed from the Y2 side (right side). FIG. 14 is a view of the seventh wire SA7 attached to the seventh upper terminal plate 5M7 and the seventh lower terminal plate 5F7, and the eighth wire SA8 attached to the eighth upper terminal plate 5M8 and the eighth lower terminal plate 5F8, as viewed from the X1 side (front side). The positional relationship of the members illustrated in FIGS. 13 and 14 corresponds to a positional relationship of the members in a state in which the module driving device 100 is assembled. In FIGS. 13 and 14, illustration of the other members is omitted for ease of understanding. The following description to be made with reference to FIGS. 13 and 14 relates to a combination of the seventh wire SA7 and the eighth wire SA8. However, the same applies to a combination of the first wire SA1 and the second wire SA2, a combination of the third wire SA3 and the fourth wire SA4, and a combination of the fifth wire SA5 and the sixth wire SA6.

Specifically, one end of the seventh wire SA7 is fixed to the seventh upper terminal plate 5M7 at a holding portion J1 of the seventh upper terminal plate 5M7, and the other end of the seventh wire SA7 is fixed to the seventh lower terminal plate 5F7 at a holding portion J2 of the seventh lower terminal plate 5F7. One end of the eighth wire SA8 is fixed to the eighth upper terminal plate 5M8 at a holding portion J3 of the eighth upper terminal plate 5M8, and the other end of the eighth wire SA8 is fixed to the eighth lower terminal plate 5F8 at a holding portion J4 of the eighth lower terminal plate 5F8.

The holding portion J1 is formed by bending a portion of the seventh upper terminal plate 5M7. Specifically, a portion of the seventh upper terminal plate 5M7 is bent in a state of holding an end portion (one end) of the seventh wire SA7, thereby forming the holding portion J1. The end portion (one end) of the seventh wire SA7 is fixed to the holding portion J1 through welding. The same applies to the holding portions J2 to J4.

When the module driving device 100 is in the neutral state, plates PM of the plurality of metal members 5 are disposed so as to be parallel to each other. In the example illustrated in FIG. 13, a plate-like portion PM1 of the seventh upper terminal plate 5M7, a plate-like portion PM2 of the seventh lower terminal plate 5F7, a plate-like portion PM3 of the eighth upper terminal plate 5M8, and a plate-like portion PM4 of the eighth lower terminal plate 5F8 are disposed so as to be parallel to each other along the XZ plane.

As illustrated in FIG. 13, the seventh wire SA7 and the eighth wire SA8 are disposed at skew positions (so as to three-dimensionally cross each other as viewed from the Y2 side). That is, the seventh wire SA7 and the eighth wire SA8 are disposed so as not to contact each other (in a noncontact manner).

Specifically, as illustrated in FIG. 13, when the module driving device 100 is in the neutral state, the seventh wire SA7 is disposed, in a right side view from the Y2 side, such that one end of the seventh wire SA7 is at a position that is higher than the other end of the seventh wire SA7, and the eighth wire SA8 is disposed such that one end of the eighth wire SA8 is at a position that is higher than the other end of the eighth wire SA8, and further the seventh wire SA7 and the eighth wire SA8 are disposed so as to cross each other. In a front view from the X1 side, the first wire SA1 is disposed such that one end of the first wire SA1 is at a position that is higher than the other end of the first wire SA1, and the second wire SA2 is disposed such that one end of the second wire SA2 is at a position that is higher than the other end of the second wire SA2, and further the first wire SA1 and the second wire SA2 are disposed so as to cross each other. In a rear view from the X2 side, the third wire SA3 is disposed such that one end of the third wire SA3 is at a position that is higher than the other end of the third wire SA3, and the fourth wire SA4 is disposed such that one end of the fourth wire SA4 is at a position that is higher than the other end of the fourth wire SA4, and further the third wire SA3 and the fourth wire SA4 are disposed so as to cross each other. In a left side view from the Y1 side, the fifth wire SA5 is disposed such that one end of the fifth wire SA5 is at a position that is higher than the other end of the fifth wire SA5, the sixth wire SA6 is disposed such that one end of the sixth wire SA6 is at a position that is higher than the other end of the sixth wire SA6, and further the fifth wire SA5 and the sixth wire SA6 are disposed so as to cross each other.

That is, in the side view, the first wire SA1 to the eighth wire SA8 are disposed so as to extend obliquely (non-parallel) relative to the X axis and the Y axis. However, as long as the first wire SA1 and the second wire SA2 are disposed so as to extend obliquely in the front view, the first wire SA1 and the second wire SA2 do not necessarily need to cross each other in the front view. The same applies to a relation between the third wire SA3 and the fourth wire SA4, a relation between the fifth wire SA5 and the sixth wire SA6, and a relation between the seventh wire SA7 and the eighth wire SA8.

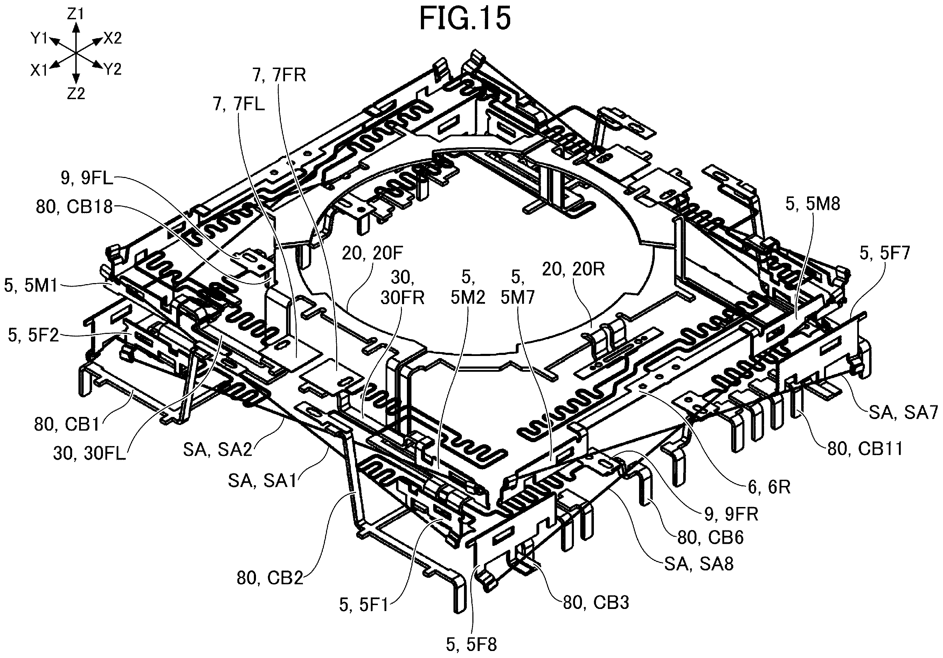

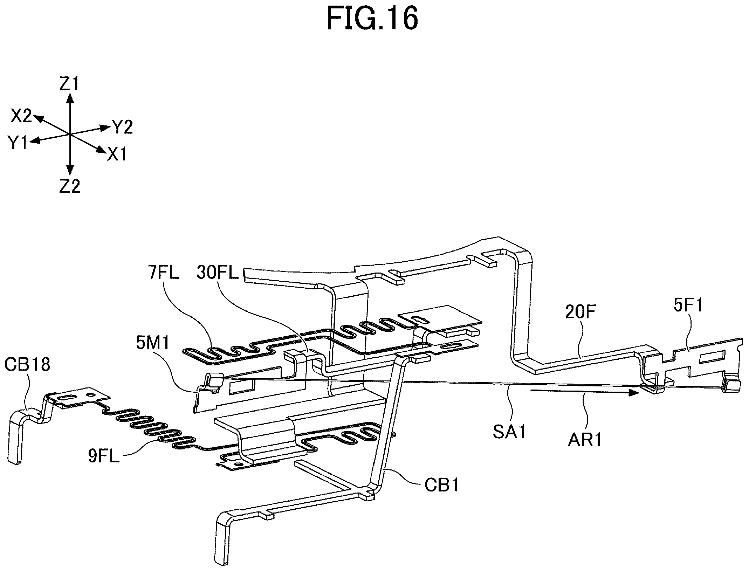

Next, a path of a current flowing through the shape memory alloy wires SA will be described with reference to FIGS. 15 to 19. FIG. 15 is a positional relationship between the metal member 5, the first conductive member 6, the second conductive member 7, the third conductive member 9, the first embedded current-conducting member 20, the second embedded current-conducting member 30, the third embedded current-conducting member 80, and the shape memory alloy wires SA. Specifically, FIG. 15 is a perspective view of the metal member 5, the first conductive member 6, the second conductive member 7, the third conductive member 9, the first embedded current-conducting member 20, the second embedded current-conducting member 30, the third embedded current-conducting member 80, and the shape memory alloy wires SA. FIGS. 16 to 19 are partially perspective views of the configuration illustrated in FIG. 15.

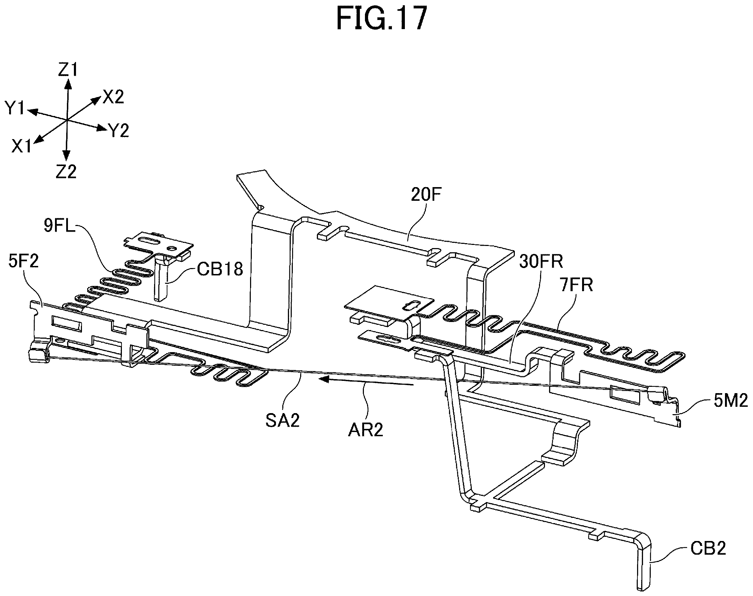

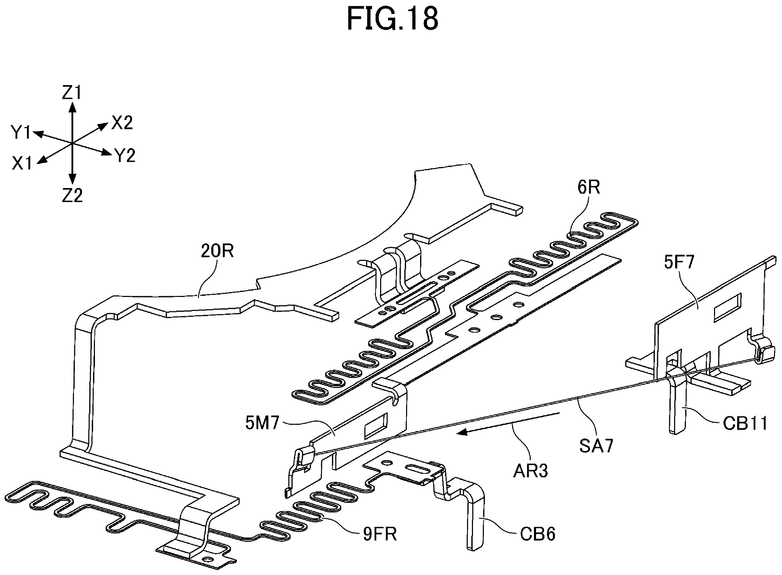

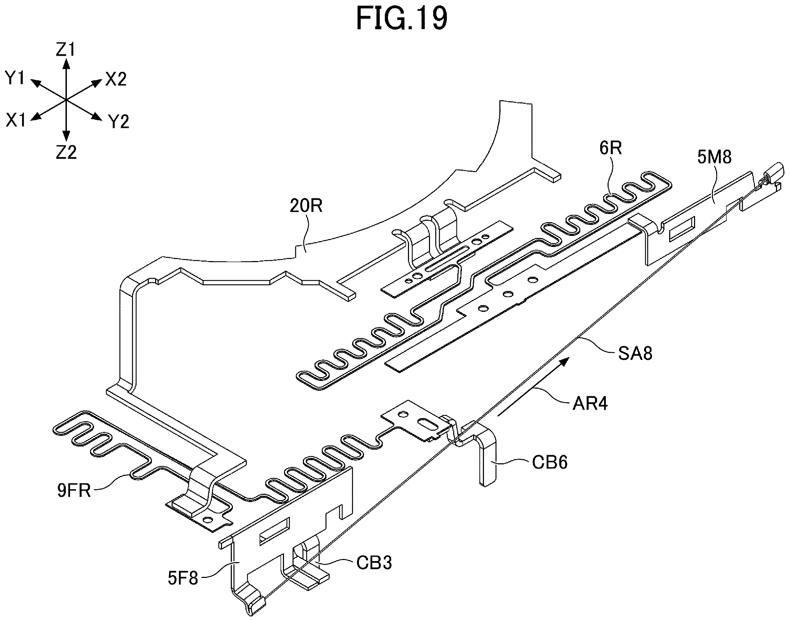

Specifically, FIG. 16 illustrates the path of a current flowing through the first wire SA1 when the first current-conducting member CB1 of the third embedded current-conducting member 80 is connected to a high potential and the 18^{th} current-conducting member CB18 of the third embedded current-conducting member 80 is connected to a low potential, and FIG. 17 illustrates the path of a current flowing through the second wire SA2 when the second current-conducting member CB2 of the third embedded current-conducting member 80 is connected to a high potential and the 18^{th} current-conducting member CB18 of the third embedded current-conducting member 80 is connected to a low potential. FIG. 18 illustrates the path of a current flowing through the seventh wire SA7 when the 11^{th} current-conducting member CB11 of the third embedded current-conducting member 80 is connected to a high potential and the sixth current-conducting member CB6 of the third embedded current-conducting member 80 is connected to a low potential, and FIG. 19 illustrates the path of a current flowing through the eighth wire SA8 when the third current-conducting member CB3 of the third embedded current-conducting member 80 is connected to a high potential and the sixth current-conducting member CB6 of the third embedded current-conducting member 80 is connected to a low potential. The following description of the path of the current flowing through the first wire SA1 or the second wire SA2 similarly applies to the path of the current flowing through the third wire SA3 or the fourth wire SA4. The following description of the path of the current flowing through the seventh wire SA7 or the eighth wire SA8 similarly applies to the path of the current flowing through the fifth wire SA5 or the sixth wire SA6.

When the first current-conducting member CB1 of the third embedded current-conducting member 80 is connected to a high potential and the 18^{th} current-conducting member CB18 of the third embedded current-conducting member 80 is connected to a low potential, a current flows through the first wire SA1 as indicated by an arrow AR1 in FIG. 16. Specifically, the current flows to the 18^{th} current-conducting member CB18 through the first current-conducting member CB1, the left-front conductive member 7FL, the left-front current-conducting member 30FL, the first upper terminal plate 5M1, the first wire SA1, the first lower terminal plate 5F1, the front current-conducting member 20F, and the left-front conductive member 9FL.

When the second current-conducting member CB2 of the third embedded current-conducting member 80 is connected to a high potential and the 18^{th} current-conducting member CB18 of the third embedded current-conducting member 80 is connected to a low potential, a current flows through the second wire SA2 as indicated by an arrow AR2 in FIG. 17. Specifically, the current flows to the 18^{th} current-conducting member CB18 through the second current-conducting member CB2, the right-front conductive member 7FR, the right-front current-conducting member 30FR, the second upper terminal plate 5M2, the second wire SA2, the second lower terminal plate 5F2, the front current-conducting member 20F, and the left-front conductive member 9FL.

In the illustrated example, the path of the current flowing through the first wire SA1 partially overlaps with the path of the current flowing through the second wire SA2. Specifically, these two paths of the current overlap with each other at a portion that passes through the front current-conducting member 20F, the left-front conductive member 9FL, and the 18^{th} current-conducting member CB18. This configuration provides the effect of reducing the number of parts.

When the 11^{th} current-conducting member CB11 of the third embedded current-conducting member 80 is connected to a high potential and the 6^{th} current-conducting member CB6 of the third embedded current-conducting member 80 is connected to a low potential, a current flows through the seventh wire SA7 as indicated by an arrow AR3 in FIG. 18. Specifically, the current flows to the sixth current-conducting member CB6 through the 11^{th} current-conducting member CB11, the seventh lower terminal plate 5F7, the seventh wire SA7, the seventh upper terminal plate 5M7, the right conductive member 6R, the right current-conducting member 20R, and the right-front conductive member 9FR.

When the third current-conducting member CB3 of the third embedded current-conducting member 80 is connected to a high potential and the sixth current-conducting member CB6 of the third embedded current-conducting member 80 is connected to a low potential, a current flows through the eighth wire SA8 as indicated by an arrow AR4 in FIG. 19. Specifically, the current flows to the sixth current-conducting member CB6 through the third current-conducting member CB3, the eighth lower terminal plate 5F8, the eighth wire SA8, the eighth upper terminal plate 5M8, the right conductive member 6R, the right current-conducting member 20R, and the right-front conductive member 9FR.

In the illustrated example, the path of the current flowing through the seventh wire SA7 partially overlaps with the path of the current flowing through the eighth wire SA8. Specifically, these two paths of the current overlap with each other at a portion that passes through the right conductive member 6R, the right current-conducting member 20R, the right-front conductive member 9FR, and the sixth current-conducting member CB6. This configuration provides the effect of reducing the number of parts.

In FIGS. 15 to 19, two neighboring members of the members forming the current-conducting paths of the shape memory alloy wires SA (the metal member 5, the first conductive member 6, the second conductive member 7, the third conductive member 9, the first embedded current-conducting member 20, the second embedded current-conducting member 30, and the third embedded current-conducting member 80) are connected to each other. This connection is achieved by means of welding or a conductive bonding material (conductive adhesive or solder). For example, in FIG. 19, the third current-conducting member CB3 and the eighth lower terminal plate 5F8, which are next to each other, are bonded with a conductive adhesive.

A controller located outside of the module driving device 100 can control extension and shrinkage of each of the first wire SA1 to the eighth wire SA8 by controlling a voltage applied to the third embedded current-conducting member 80 connected to the first lower terminal plate 5F1 to the eighth lower terminal plate 5F8. Alternatively, the controller can control extension and shrinkage of each of the first wire SA1 to the eighth wire SA8 by controlling a current supplied to each of the first wire SA1 to the eighth wire SA8 through the third embedded current-conducting member 80 connected to the first lower terminal plate 5F1 to the eighth lower terminal plate 5F8. The controller may be disposed in the module driving device 100. The controller may be a component of the module driving device 100.

With such a configuration, the controller can rotate (revolve or rock) the module holder 2 about at least one of the first rotation axis RX1, the second rotation axis RX2, or the third rotation axis RX3. By such a movement of the module holder 2, the controller may achieve an image stabilization function.

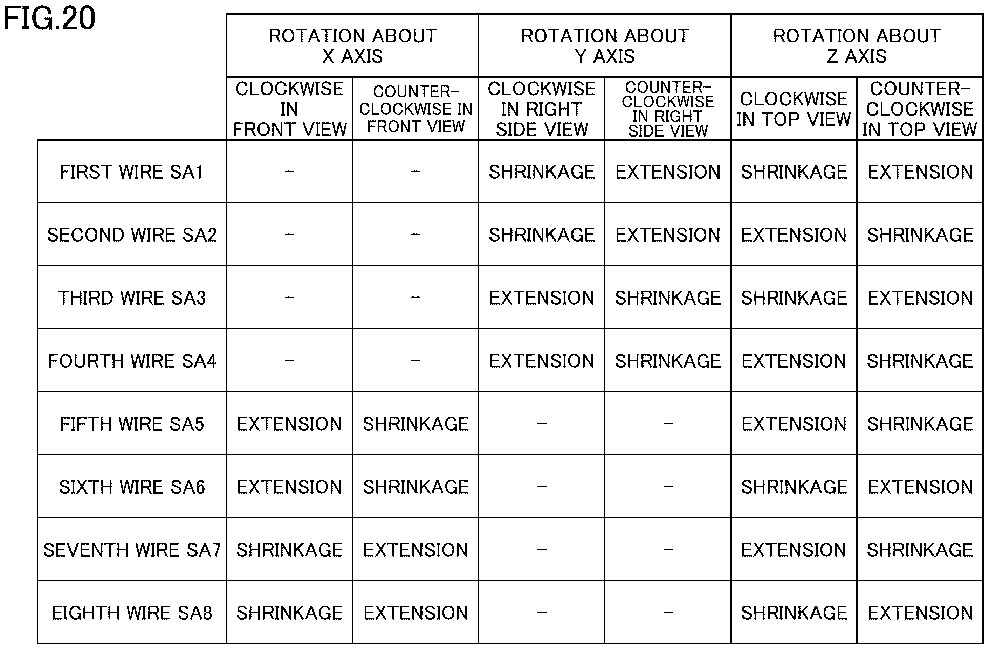

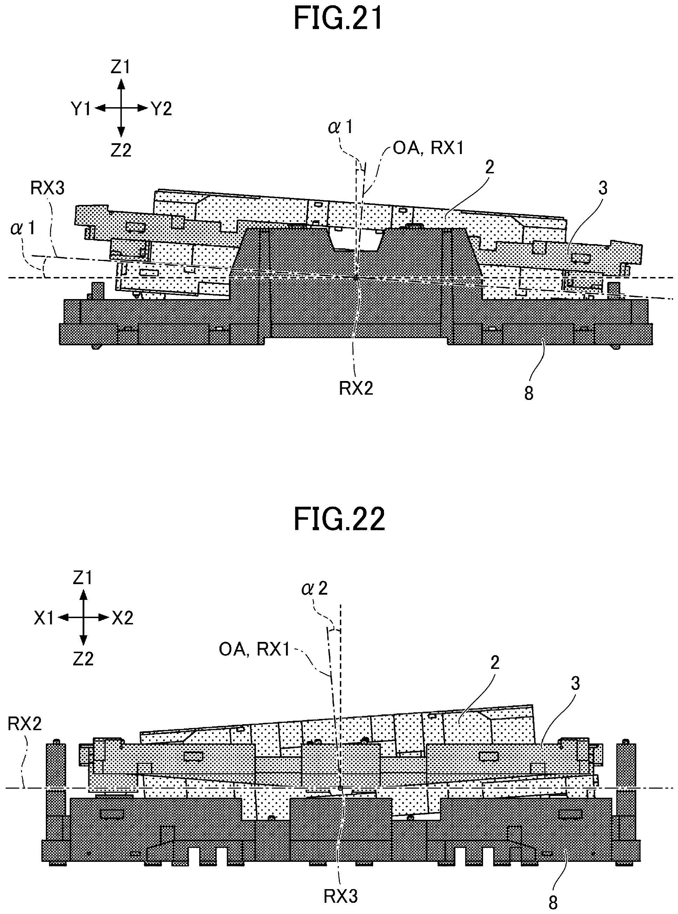

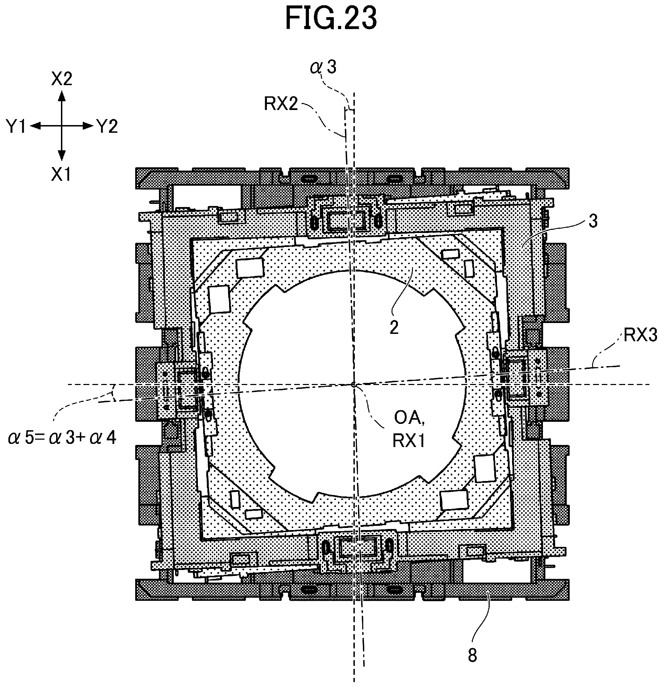

Next, details of the driver DM will be described with reference to FIGS. 20 to 23. FIG. 20 is a table illustrating extension and shrinkage of the shape memory alloy wires SA at the time of achieving three degrees of freedom of movement of the module holder 2. Specifically, "shrinkage" in FIG. 20 indicates shrinking the shape memory alloy wires SA that are in a reference state, and "extension" in FIG. 20 indicates extending the shape memory alloy wires SA that are in the reference state. The reference state means a state of the shape memory alloy wires SA when the module driving device 100 is in a neutral state. In the illustrated example, when the module driving device 100 is in a neutral state, each of the first wire SA1 to the eighth wire SA8 is not loosened because a current is flowing through each of the first wire SA1 to the eighth wire SA8. FIG. 21 is a front view of three members (the module holder 2, the connection member 3, and the base member 8) when the module holder 2 and the connection member 3 rotate (rock) about the X axis (the second rotation axis RX2) relative to the base member 8. FIG. 22 is a right side view of the three members when the module holder 2 rotates (rocks) about the Y axis (the third rotation axis RX3) relative to the connection member 3. FIG. 23 is a top view of the three members when the module holder 2 and the connection member 3 rotate (revolve) about the Z axis (the first rotation axis RX1) relative to the base member 8. In FIGS. 21 to 23, for ease of understanding, the module holder 2 is provided with a rough dot pattern, the connection member 3 is provided with a fine dot pattern, and the base member 8 is provided with a finer dot pattern.

FIG. 21 is a front view of the three members when the module holder 2 and the connection member 3 rock clockwise about the X axis (the second rotation axis RX2) by an angle α1 relative to the base member 8. When rocking the module holder 2 and the connection member 3 clockwise about the X axis (the second rotation axis RX2) relative to the base member 8 in the front view, the controller extends the fifth wire SA5 and the sixth wire SA6 by substantially the same amount of extension, and shrinks the seventh wire SA7 and the eighth wire SA8 by substantially the same amount of shrinkage, as illustrated in the table of FIG. 20. In the illustrated example, extending the two shape memory alloy wires SA by substantially the same amount of extension means extending the two shape memory alloy wires SA until the lengths of the two shape memory alloy wires SA become substantially the same predetermined length. The same applies in the following description. The controller maintains the amount of extension or shrinkage of the first shape memory alloy wires SC1 (the first wire SA1 to the fourth wire SA4). Specifically, the controller individually adjusts the magnitude of a current supplied to each of the first wire SA1 to the eighth wire SA8, thereby controlling the amount of extension or shrinkage of each of the first wire SA1 to the eighth wire SA8 in the above-described manner. By this control performed by the controller, the driver DM can rock the module holder 2 and the connection member 3 clockwise about the X axis (the second rotation axis RX2) relative to the base member 8, as illustrated in FIG. 21.

When rotating the module holder 2 and the connection member 3 counterclockwise about the X axis (the second rotation axis RX2) relative to the base member 8 in the front view, the controller shrinks the fifth wire SA5 and the sixth wire SA6 by substantially the same amount of shrinkage, and extends the seventh wire SA7 and the eighth wire SA8 by substantially the same amount of extension, as illustrated in the table of FIG. 20. The controller maintains the amount of extension or shrinkage of the first shape memory alloy wires SC1 (the first wire SA1 to the fourth wire SA4). The controller individually adjusts the magnitude of a current supplied to each of the first wire SA1 to the eighth wire SA8, thereby controlling the amount of extension or shrinkage of each of the first wire SA1 to the eighth wire SA8 in the above-described manner. By this control performed by the controller, the driver DM can rock the module holder 2 and the connection member 3 counterclockwise about the X axis (the second rotation axis RX2) relative to the base member 8.

FIG. 22 is a right side view of the three members when the module holder 2 rocks counterclockwise by an angle α2 about the Y axis (the third rotation axis RX3) relative to the connection member 3 and the base member 8. When rocking the module holder 2 counterclockwise about the Y axis (the third rotation axis RX3) relative to the connection member 3 in the right side view, the controller extends the first wire SA1 and the second wire SA2 by substantially the same amount of extension, and shrinks the third wire SA3 and the fourth wire SA4 by substantially the same amount of shrinkage, as illustrated in the table of FIG. 20. The controller maintains the amount of extension or shrinkage of the second shape memory alloy wires SC2 (the fifth wire SA5 to the eighth wire SA8). Specifically, the controller individually adjusts the magnitude of a current supplied to each of the first wire SA1 to the eighth wire SA8, thereby controlling the amount of extension or shrinkage of each of the first wire SA1 to the eighth wire SA8 in the above-described manner. By this control performed by the controller, the driver DM can rock the module holder 2 counterclockwise about the Y axis (the third rotation axis RX3) relative to the connection member 3, as illustrated in the lower view in FIG. 22.

When rocking the module holder 2 clockwise about the Y axis (the third rotation axis RX3) relative to the connection member 3 in the right side view, the controller shrinks the first wire SA1 and the second wire SA2 by substantially the same amount of shrinkage, and extends the third wire SA3 and the fourth wire SA4 by substantially the same amount of extension, as illustrated in the table of FIG. 20. The controller maintains the amount of extension or shrinkage of the second shape memory alloy wires SC2 (the fifth wire SA5 to the eighth wire SA8). Specifically, the controller individually adjusts the magnitude of a current supplied to each of the first wire SA1 to the eighth wire SA8, thereby controlling the amount of extension or shrinkage of each of the first wire SA1 to the eighth wire SA8 in the above-described manner. By this control performed by the controller, the driver DM can rock the module holder 2 clockwise about the Y axis (the third rotation axis RX3) relative to the connection member 3.

FIG. 23 is a top view of the three members when the connection member 3 rotates counterclockwise about the Z axis (the first rotation axis RX1) by an angle α3 relative to the base member 8, and the module holder 2 rotates about the Z axis (the first rotation axis RX1) by an angle α4 relative to the connection member 3. That is, FIG. 23 is a top view of the three members when the module holder 2 rotates counterclockwise about the Z axis (the first rotation axis RX1) by an angle α5 relative to the base member 8. The angle α5 is the sum of the angle α3 and the angle α4.

When rotating the connection member 3 counterclockwise about the Z axis (the first rotation axis RX1) relative to the base member 8 in the top view, the controller shrinks the fifth wire SA5 and the seventh wire SA7 by substantially the same amount of shrinkage, and extends the sixth wire SA6 and the eighth wire SA8 by substantially the same amount of extension, as illustrated in the table of FIG. 20. When rotating the module holder 2 counterclockwise about the Z axis (the first rotation axis RX1) relative to the connection member 3 in the top view, the controller extends the first wire SA1 and the third wire SA3 by substantially the same amount of extension, and shrinks the second wire SA2 and the fourth wire SA4 by substantially the same amount of shrinkage, as illustrated in the table of FIG. 20. Specifically, the controller individually adjusts the magnitude of a current supplied to each of the first wire SA1 to the eighth wire SA8, thereby controlling the amount of extension or shrinkage of each of the first wire SA1 to the eighth wire SA8 in the above-described manner. By this control performed by the controller, as illustrated in FIG. 23, the driver DM can rotate the connection member 3 counterclockwise about the Z axis (the first rotation axis RX1) relative to the base member 8, and can rotate the module holder 2 counterclockwise about the Z axis (the first rotation axis RX1) relative to the connection member 3.

When rotating the connection member 3 clockwise about the Z axis (the first rotation axis RX1) relative to the base member 8 in the top view, the controller extends the fifth wire SA5 and the seventh wire SA7 by substantially the same amount of extension, and shrinks the sixth wire SA6 and the eighth wire SA8 by substantially the same amount of shrinkage, as illustrated in the table in FIG. 20. When rotating the module holder 2 clockwise about the Z axis (the first rotation axis RX1) relative to the connection member 3 in the top view, the controller shrinks the first wire SA1 and the third wire SA3 by substantially the same amount of shrinkage, and extends the second wire SA2 and the fourth wire SA4 by substantially the same amount of extension, as illustrated in the table in FIG. 20. Specifically, the controller individually adjusts the magnitude of a current supplied to each of the first wire SA1 to the eighth wire SA8, thereby controlling the amount of extension or shrinkage of each of the first wire SA1 to the eighth wire SA8 in the above-described manner. By this control performed by the controller, the driver DM can rotate the connection member 3 clockwise about the Z axis (the first rotation axis RX1) relative to the base member 8, and can rotate the module holder 2 clockwise about the Z axis (the first rotation axis RX1) relative to the connection member 3.

The table of FIG. 20 illustrates the extension or shrinkage state of the shape memory alloy wires SA when rotating the connection member 3 about the Z axis (the first rotation axis RX1) relative to the base member 8 in the top view and at the same time rotating the module holder 2 in the same direction about the Z axis (the first rotation axis RX1) relative to the connection member 3 in the top view.

However, the controller may maintain the amount of extension or shrinkage of the first shape memory alloy wires SC1 (the first wire SA1 to the fourth wire SA4), thereby rotating only the connection member 3 about the Z axis (the first rotation axis RX1) relative to the base member 8 in the top view. Alternatively, the controller may maintain the amount of extension or shrinkage of the second shape memory alloy wires SC2 (the fifth wire SA5 to the eighth wire SA8), thereby rotating only the module holder 2 about the Z axis (the first rotation axis RX1) relative to the connection member 3 in the top view. The controller may rotate the connection member 3 about the Z axis (the first rotation axis RX1) in one direction (e.g., clockwise) relative to the base member 8 in the top view and at the same time rotate the module holder 2 about the Z axis (the first rotation axis RX1) in another direction (e.g., counterclockwise) relative to the connection member 3 in the top view.

Next, a configuration example of the lens driving device LD will be described with reference to FIG. 24. FIG. 24 is an exploded perspective view of the lens driving device LD. In the example illustrated in FIG. 24, the lens driving device LD includes a lens holder 2x, a module-side metal member 5x, a leaf spring 6x, a module-side base member 8x, a module-side embedded current-conducting member 20x, an imaging element holder AD, an intermediate current-conducting member EC, and module-side shape memory alloy wires SB.

The lens holder 2x is formed through injection molding of a synthetic resin, such as a liquid crystal polymer (LCP) or the like. Specifically, as illustrated in FIG. 24, the lens holder 2x includes: a cylindrical portion 12x formed so as to extend along the optical axis OA; and a movable-side base portion 2Dx and a projection 2Sx that are formed so as to project radially outward of the cylindrical portion 12x. In the example illustrated in FIG. 24, a spiral groove is formed in the inner peripheral surface of the cylindrical portion 12x such that an adhesive can spread between the upper-half portion of the inner peripheral surface and the lens body LS (see FIG. 2).

The movable-side base portion 2Dx includes a first movable-side base portion 2D1x and a second movable-side base portion 2D2x. The first movable-side base portion 2D1x and the second movable-side base portion 2D2x are disposed to extend in opposite directions (radially outwardly) across the optical axis OA. The projection 2Sx includes a first projection 2S1x and a second projection 2S2x. The first projection 2S1x and the second projection 2S2x are disposed so as to extend in opposite directions (radially outwardly) across the optical axis OA. Specifically, the movable-side base portions 2Dx and the projections 2Sx are disposed so as to correspond to the four corners of the lens holder 2x having an outer shape that is a substantially rectangular frame in a top view, and are arranged alternately. A part of the leaf spring 6x is placed at and fixed to each of the two movable-side base portions 2Dx.

The leaf spring 6x is configured to support the lens holder 2x so as to be movable with respect to a module-side fixed member FBx (the module-side base member 8x) in the direction parallel to the optical axis OA. The leaf spring 6x is formed, for example, of a conductive metal plate formed mainly of a copper alloy, a titanium-copper-based alloy (titanium-copper), or a copper-nickel alloy (nickel-tin-copper), or the like. In the example illustrated in FIG. 24, the leaf spring 6x includes a first leaf spring 6Ax and a second leaf spring 6Bx.

The module-side base member 8x is formed through injection molding using a synthetic resin, such as a liquid crystal polymer (LCP) or the like. In the example illustrated in FIG. 24, similar to the base member 8, the module-side base member 8x has a profile that is a substantially rectangular frame in a top view, and has an opening 8Kx at the center thereof. Specifically, the module-side base member 8x includes a rectangular base disposed so as to enclose the opening 8Kx that is circular. The base includes four side portions 8Ex (first side portion 8E1x to fourth side portion 8E4x). In the illustrated example, the module-side base member 8x is integrated with the module holder 2 with an adhesive or the like, and forms a casing for the camera module MD together with the module holder 2.

The leaf spring 6x is configured to connect the movable-side base portion 2Dx formed at the lens holder 2x, to a fixed-side base portion 8Dx formed at the module-side base member 8x. The fixed-side base portion 8Dx is a portion projecting upwardly from the base of the module-side base member 8x, and includes a first fixed-side base portion 8D1x and a second fixed-side base portion 8D2x.

More specifically, the first leaf spring 6Ax is configured to connect the first movable-side base portion 2D1x formed at the lens holder 2x, to the first fixed-side base portion 8D1x and the second fixed-side base portion 8D2x that are formed at the module-side base member 8x. The second leaf spring 6Bx is configured to connect the second movable-side base portion 2D2x formed at the lens holder 2x, to the first fixed-side base portion 8D1x and the second fixed-side base portion 8D2x that are formed at the module-side base member 8x.

The module-side base member 8x is configured to function as a fixed-side wire support configured to support one end of each of the eight module-side shape memory alloy wires SB. A lens holder 2x is configured to function as a movable-side wire support configured to support the other end of each of the eight module-side shape memory alloy wires SB. With this configuration, a module-side movable member MBx is supported by the eight module-side shape memory alloy wires SB in a state of being movable in six degrees of freedom relative to the module-side fixed member FBx.

The module-side base member 8x is configured such that the module-side embedded current-conducting member 20x, formed of a conductive metal plate containing a material, such as copper, iron, an alloy formed mainly of copper or iron, or the like, is embedded in the module-side base member 8x through insert molding.

The module-side embedded current-conducting member 20x is a member used for conducting a current through third shape memory alloy wires SC3 and fourth shape memory alloy wires SC4. In the illustrated example, the module-side embedded current-conducting member 20x includes eleven members independent of each other (first current-conducting member CD1 to 11^{th} current-conducting member CD11).

The imaging element holder AD is configured to hold the imaging element IS (see FIG. 2). In the illustrated example, the imaging element holder AD is adhesively fixed to the lower surface of the module-side base member 8x. A spacer SP (see FIG. 2) integrated with the imaging element IS is fixed to the imaging element holder AD. The imaging element holder AD forms a module-side fixed member FBx together with the module-side base member 8x. The module-side fixed member FBx may include the spacer SP.

The intermediate current-conducting member EC is a member used for conducting a current between the module-side embedded current-conducting member 20x and the third embedded current-conducting member 80 (see FIG. 8). In the illustrated example, the intermediate current-conducting member EC includes ten members independent of each other (first intermediate current-conducting member EC1 to tenth intermediate current-conducting member EC10). One end of each of the first intermediate current-conducting member EC1 to the tenth intermediate current-conducting member EC10 is connected via an elastically deformable connection portion to the other end of each of the first intermediate current-conducting member EC1 to the tenth intermediate current-conducting member EC10.

The module-side metal member 5x is configured such that the ends of the module-side shape memory alloy wires SB are fixed to the module-side metal member 5x. In the example illustrated in FIG. 24, the module-side metal member 5x is formed of a non-magnetic metal, and includes a module-side fixed metal member 5K and a module-side movable metal member 5W. The module-side fixed metal member 5K is configured so as to be bonded and fixed to the fixed-side base portion 8Dx of the module-side base member 8x. The module-side movable metal member 5W is configured so as to be bonded and fixed to the movable-side base portion 2Dx of the lens holder 2x.

In the example illustrated in FIG. 24, the module-side fixed metal member 5K is also referred to as a fixed-side terminal plate, and includes a first fixed-side terminal plate 5K1 to an eighth fixed-side terminal plate 5K8. The module-side movable metal member 5W is also referred to as a movable-side terminal plate, and includes a first movable-side terminal plate 5W1 to a fourth movable-side terminal plate 5W4.

The first leaf spring 6Ax includes a first portion 6A1x fixed to the first fixed-side base portion 8D1x of the module-side base member 8x, a second portion 6A2x fixed to the second fixed-side base portion 8D2x of the module-side base member 8x, and a third portion 6A3x fixed to the first movable-side base portion 2D1x of the lens holder 2x. The first portion 6A1x is connected to the module-side embedded current-conducting member 20x (the eighth current-conducting member CD8), embedded in the module-side base member 8x, through laser welding or the like, and the third portion 6A3x is connected to the second movable-side terminal plate 5W2 and the third movable-side terminal plate 5W3 through soldering or the like.

The second leaf spring 6Bx includes a first portion 6B1x fixed to the first fixed-side base portion 8D1x of the module-side base member 8x, a second portion 6B2x fixed to the second fixed-side base portion 8D2x of the module-side base member 8x, and a third portion 6B3x fixed to the second movable-side base portion 2D2x of the lens holder 2x. The second portion 6B2x is connected to the module-side embedded current-conducting member 20x (the third current-conducting member CD3), embedded in the module-side base member 8x, through laser welding or the like, and the third portion 6B3x is connected to the first movable-side terminal plate 5W1 and the fourth movable-side terminal plate 5W4 through soldering or the like.

The module-side shape memory alloy wires SB are another example of a shape memory actuator. Similar to the shape memory alloy wires SA, in response to flowing of a current, the module-side shape memory alloy wires SB increase in temperature and shrink as a result of the increase in temperature. Specifically, the module-side shape memory alloy wires SB are disposed along the inner surface of the outer peripheral wall of the module holder 2, and are configured to move the module-side movable member MBx relative to the module-side fixed member FBx. In the example illustrated in FIG. 24, the module-side shape memory alloy wires SB include a first wire SB1 to an eighth wire SB8 having substantially the same length and substantially the same diameter, and are configured to move the lens holder 2x, which is the module-side movable member MBx, relative to the module-side base member 8x and the imaging element holder AD, which are the module-side fixed member FBx. As illustrated in FIG. 24, one end of each of the first wire SB1 to the eighth wire SB8 is fixed to the module-side fixed metal member 5K through crimping, welding, or the like, and the other end of each of the first wire SB1 to the eighth wire SB8 is fixed to the module-side movable metal member 5W through crimping, welding, or the like. In the illustrated example, the first wire SB1 to the fourth wire SB4 are also referred to as the third shape memory alloy wires SC3, and the fifth wire SBS to the eighth wire SB8 are also referred to as the fourth shape memory alloy wires SC4.

Each of the first fixed-side terminal plate 5K1 to the eighth fixed-side terminal plate 5K8, to which one end of each of the first wire SB1 to the eighth wire SB8 is to be fixed, is electrically connected to a corresponding conductive pattern formed on an external circuit board (not illustrated) via the module-side embedded current-conducting member 20x, the intermediate current-conducting member EC, and the third embedded current-conducting member 80, which are embedded in the module-side base member 8x. Each of the first movable-side terminal plate 5W1 to the fourth movable-side terminal plate 5W4, to which the other end of each of the first wire SB1 to the eighth wire SB8 is to be fixed, is electrically connected to a corresponding conductive pattern formed on the external circuit board via the leaf springs 6x (the first leaf spring 6Ax and the second leaf spring 6Bx), the module-side embedded current-conducting member 20x, the intermediate current-conducting member EC, and the third embedded current-conducting member 80, which are embedded in the module-side base member 8x. Therefore, the lens driving device LD is configured to receive a supply of a current flowing through each of the first wire SB1 to the eighth wire SB8 via the external circuit board.

The module-side shape memory alloy wires SB form the module-side driver DMx. The module-side driver DMx can move the lens holder 2x relative to the module-side base member 8x by utilizing the shrinkage of the module-side shape memory alloy wires SB. The module-side shape memory alloy wires SB are configured such that in response to shrinkage of one or more of the first wire SB1 to the eighth wire SB8, the lens holder 2x moves, and one or more of the other wires are extended by the movement of the lens holder 2x.

Specifically, when the lens driving device LD is in the neutral state, in the front view from the X1 side, the first wire SB1 is disposed such that one end (fixed end) of the first wire SB1 is at a position that is higher than the other end (movable end), and the second wire SB2 is disposed such that one end (fixed end) of the second wire SB2 is at a position that is lower than the other end (movable end), and further the first wire SB1 and the second wire SB2 are disposed so as to cross each other. In the top view from the Z1 side, one end (fixed end) of each of the first wire SB1 and the second wire SB2 is fixed to the module-side fixed metal member 5K so as to be outward (X1 side) of the other end (movable end) fixed to the first movable-side terminal plate 5W1.

In the rear view from the X2 side, the third wire SB3 is disposed such that one end (fixed end) of the third wire SB3 is at a position that is higher than the other end (movable end), and the fourth wire SB4 is disposed such that one end (fixed end) of the fourth wire SB4 is at a position that is lower than the other end (movable end), and further the third wire SB3 and the fourth wire SB4 are disposed so as to cross each other. In the top view, one end (fixed end) of each of the third wire SB3 and the fourth wire SB4 is positioned outward (X2 side) of the other end (movable end).

In the left side view from the Y1 side, the fifth wire SBS is disposed such that one end (fixed end) of the fifth wire SBS is at a position that is lower than the other end (movable end), and the sixth wire SB6 is disposed such that one end (fixed end) of the sixth wire SB6 is at a position that is higher than the other end (movable end), and further the fifth wire SBS and the sixth wire SB6 are disposed so as to cross each other. In the top view, one end (fixed end) of each of the fifth wire SBS and the sixth wire SB6 is positioned outward (Y1 side) of the other end (movable end).

In the right side view from the Y2 side, the seventh wire SB7 is disposed such that one end (fixed end) of the seventh wire SB7 is at a position that is lower than the other end (movable end), and the eighth wire SB8 is disposed such that one end (fixed end) of the eighth wire SB8 is at a position that is higher than the other end (movable end), and further the seventh wire SB7 and the eighth wire SB8 are disposed so as to cross each other. In the top view, one end (fixed end) of each of the seventh wire SB7 and the eighth wire SB8 is positioned outward (Y2 side) of the other end (movable end).

That is, in the side view, the first wire SB1 to the eighth wire SB8 are disposed so as to extend obliquely (non-parallel) relative to the X axis and the Y axis.

However, the first wire SB1 and the second wire SB2 do not necessarily need to cross each other in the front view as long as the first wire SB1 and the second wire SB2 are disposed so as to extend obliquely in the front view. The same applies to a relation between the third wire SB3 and the fourth wire SB4, a relation between the fifth wire SBS and the sixth wire SB6, and a relation between the seventh wire SB7 and the eighth wire SB8.

In the example illustrated in FIG. 24, in principle, the module-side driver DMx is configured to achieve movements of six degrees of freedom of the module-side movable member MBx. The movements of six degrees of freedom include: translation in a first direction (the Z-axis direction), which is the direction of the optical axis; translation in a second direction (the X-axis direction) perpendicular to the first direction (the Z-axis direction); translation in a third direction (the Y-axis direction) perpendicular to the first direction and the second direction; rotation about the Z-axis; rotation about the X-axis; and rotation about the Y-axis. The first direction (the Z-axis direction) is a direction parallel to the first rotation axis RX1 that coincides with the optical axis OA of the lens body LS, the second direction (the X-axis direction) is a direction parallel to the second rotation axis RX2, and the third direction (the Y-axis direction) is a direction parallel to the third rotation axis RX3. In the example illustrated in FIG. 24, the module-side driver DMx is configured not to utilize the rotation about the Z-axis, the rotation about the X-axis, and the rotation about the Y-axis. This is because the rotation of the camera module MD about the Z axis is achieved by rotating (revolving) the module holder 2 about the Z axis by the driver DM, i.e., there is no need to rotate the lens holder 2x about the Z axis. Also, this is because the rotation of the camera module MD about the X axis is achieved by rotating (rocking) the module holder 2 about the X axis by the driver DM, i.e., there is no need to rotate the lens holder 2x about the X axis. The same applies to the rotation about the Y axis.

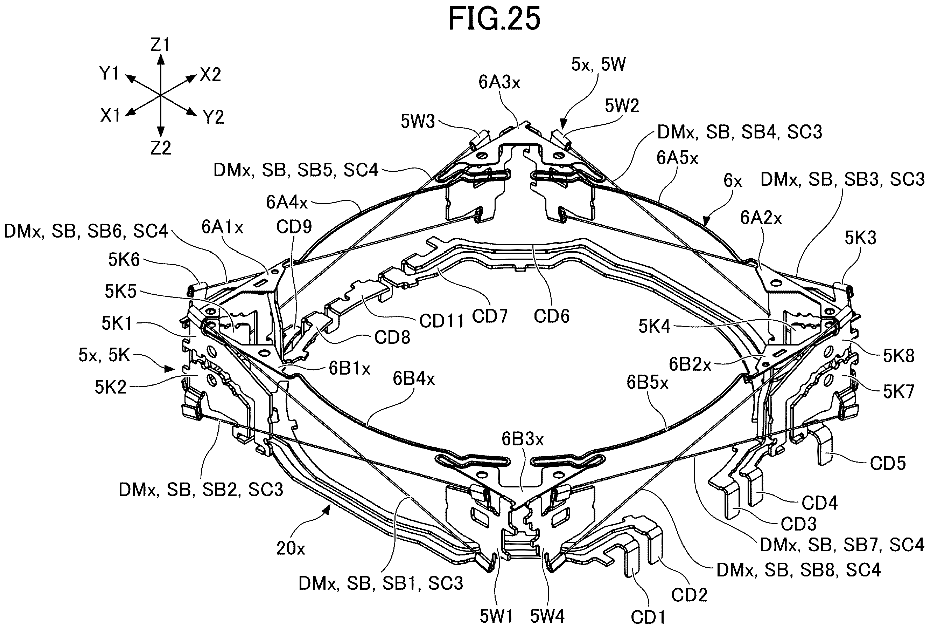

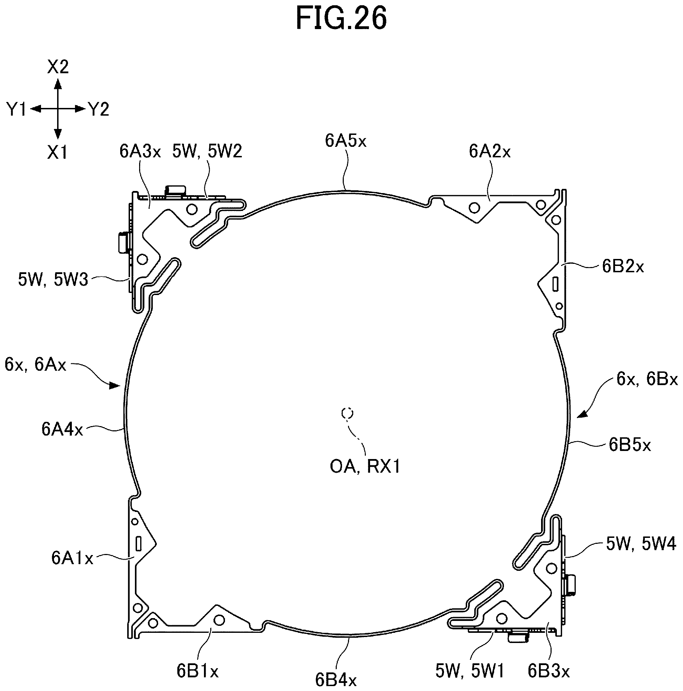

Next, a positional relationship between the module-side metal member 5x, the leaf spring 6x, the module-side embedded current-conducting member 20x, and the module-side shape memory alloy wires SB will be described with reference to FIGS. 25 and 26. FIGS. 25 and 26 are views illustrating the positional relationship between the module-side metal member 5x, the leaf spring 6x, the module-side embedded current-conducting member 20x, and the module-side shape memory alloy wires SB. Specifically, FIG. 25 is a perspective view of the module-side metal member 5x, the leaf spring 6x, the module-side embedded current-conducting member 20x, and the module-side shape memory alloy wires SB that are assembled together, and FIG. 26 is a top view of the module-side movable metal member 5W and the leaf spring 6x that are assembled together.

As illustrated in FIG. 25, the first leaf spring 6Ax, which is one of the leaf springs 6x, includes the first portion 6A1x fixed to the first fixed-side base portion 8D1x (see FIG. 24) of the module-side base member 8x, the second portion 6A2x fixed to the second fixed-side base portion 8D2x (see FIG. 24) of the module-side base member 8x, the third portion 6A3x fixed to the first movable-side base portion 2D1x (see FIG. 24) of the lens holder 2x, the fourth portion 6A4x connecting the first portion 6A1x and the third portion 6A3x, and the fifth portion 6A5x connecting the second portion 6A2x and the third portion 6A3x. As illustrated in FIG. 25, the second leaf spring 6Bx, which is another one of the leaf springs 6x, includes a first portion 6B1x fixed to the first fixed-side base portion 8D1x (see FIG. 24) of the module-side base member 8x, the second portion 6B2x fixed to the second fixed-side base portion 8D2x (see FIG. 24) of the module-side base member 8x, the third portion 6B3x fixed to the second movable-side base portion 2D2x (see FIG. 24) of the lens holder 2x, the fourth portion 6B4x connecting the first portion 6B1x and the third portion 6B3x, and the fifth portion 6B5x connecting the second portion 6A2x and the third portion 6A3x.

The first portion 6A1x of the first leaf spring 6Ax is provided with a through-hole that receives an upwardly projecting cylindrical projection formed at the first fixed-side base portion 8D1x, and a through-hole used for bonding to the upper end portion of the eighth current-conducting member CD8. In the illustrated example, the fixation between the first portion 6A1x and the first fixed-side base portion 8D1x is achieved by performing heat caulking or cold caulking on the projection. However, the fixation between the first portion 6Ax1 and the projection may be achieved with an adhesive. In the illustrated example, the bonding between the first portion 6Ax1 and the eighth current-conducting member CD8 is achieved through welding, such as laser welding or the like. However, the bonding between the first portion 6Ax1 and the eighth current-conducting member CD8 may be achieved with a solder, a conductive adhesive, or the like. The same applies to the second portion 6B2x of the second leaf spring 6Bx.

The third portion 6A3x of the first leaf spring 6Ax is provided with a through-hole that receives an upwardly projecting cylindrical projection formed at the first movable-side base portion 2D1x, and a portion used for bonding to the second movable-side terminal plate 5W2 and the third movable-side terminal plate 5W3. In the illustrated example, the fixation between the third portion 6A3x and the first movable-side base portion 2D1x is achieved by performing heat caulking or cold caulking on the projection. However, the fixation between the third portion 6A3x and the first movable-side base portion 2D1x may be achieved with an adhesive. In the illustrated example, the bonding of the third portion 6A3x to each of the second movable-side terminal plate 5W2 and the third movable-side terminal plate 5W3 is achieved through welding, such as laser welding or the like. However, the bonding of the third portion 6A3x to each of the second movable-side terminal plate 5W2 and the third movable-side terminal plate 5W3 may be achieved with a solder, a conductive adhesive, or the like. The same applies to the third portion 6B3x of the second leaf spring 6Bx.

The second portion 6A2x of the first leaf spring 6Ax is provided with a through-hole that receives an upwardly projecting cylindrical projection formed at the second fixed-side base portion 8D2x. In the illustrated example, the fixation between the second portion 6A2x and the second fixed-side base portion 8D2x is achieved by performing heat caulking or cold caulking on the projection. However, the fixation between the second portion 6A2x and the second fixed-side base portion 8D2x may be achieved with an adhesive. The same applies to the first portion 6B1x of the second leaf spring 6Bx.

As illustrated in FIG. 26, the leaf spring 6x is configured so as to be 2-fold rotationally symmetric relative to the first rotation axis RX1. Therefore, the leaf spring 6x does not negatively affect the weight balance of the lens holder 2x. The leaf spring 6x does not negatively affect the weight balance of the module-side movable member MBx supported by the eight module-side shape memory alloy wires SB (the first wire SB1 to the eighth wire SB8) .

As illustrated in FIGS. 24 and 25, the module-side fixed metal member 5K (the first fixed-side terminal plate 5K1 to the eighth fixed-side terminal plate 5K8) is configured so as to be electrically connected to a corresponding conductive pattern formed on an external circuit board (not illustrated) via the module-side embedded current-conducting member 20x. In the illustrated example, the first fixed-side terminal plate 5K1 is connected to the first current-conducting member CD1, the second fixed-side terminal plate 5K2 is connected to the second current-conducting member CD2, the third fixed-side terminal plate 5K3 is connected to the sixth current-conducting member CD6, the fourth fixed-side terminal plate 5K4 is connected to the seventh current-conducting member CD7, the fifth fixed-side terminal plate 5K5 is connected to the tenth current-conducting member CD10, the sixth fixed-side terminal plate 5K6 is connected to the ninth current-conducting member CD9, the seventh fixed-side terminal plate 5K7 is connected to the fifth current-conducting member CD5, and the eighth fixed-side terminal plate 5K8 is connected to the fourth current-conducting member CD4.

In the illustrated example, the module-side movable metal member 5W and the leaf spring 6x are bonded to each other. Specifically, as illustrated in FIG. 26, the first movable-side terminal plate 5W1 and the fourth movable-side terminal plate 5W4 are bonded substantially perpendicular to the third portion 6B3x of the second leaf spring 6Bx through welding, such as laser welding or the like. The second movable-side terminal plate 5W2 and the third movable-side terminal plate 5W3 are bonded substantially perpendicular to the third portion 6A3x of the first leaf spring 6Ax through welding, such as laser welding or the like.

Meanwhile, the module-side fixed metal member 5K and the leaf spring 6x are not bonded to each other. Specifically, the first fixed-side terminal plate 5K1 and the second fixed-side terminal plate 5K2 are disposed apart from the first portion 6B1x of the second leaf spring 6Bx, and the fifth fixed-side terminal plate 5K5 and the sixth fixed-side terminal plate 5K6 are disposed apart from the first portion 6A1x of the first leaf spring 6Ax. The third fixed-side terminal plate 5K3 and the fourth fixed-side terminal plate 5K4 are disposed apart from the second portion 6A2x of the first leaf spring 6Ax, and the seventh fixed-side terminal plate 5K7 and the eighth fixed-side terminal plate 5K8 are disposed apart from the second portion 6B2x of the second leaf spring 6Bx.

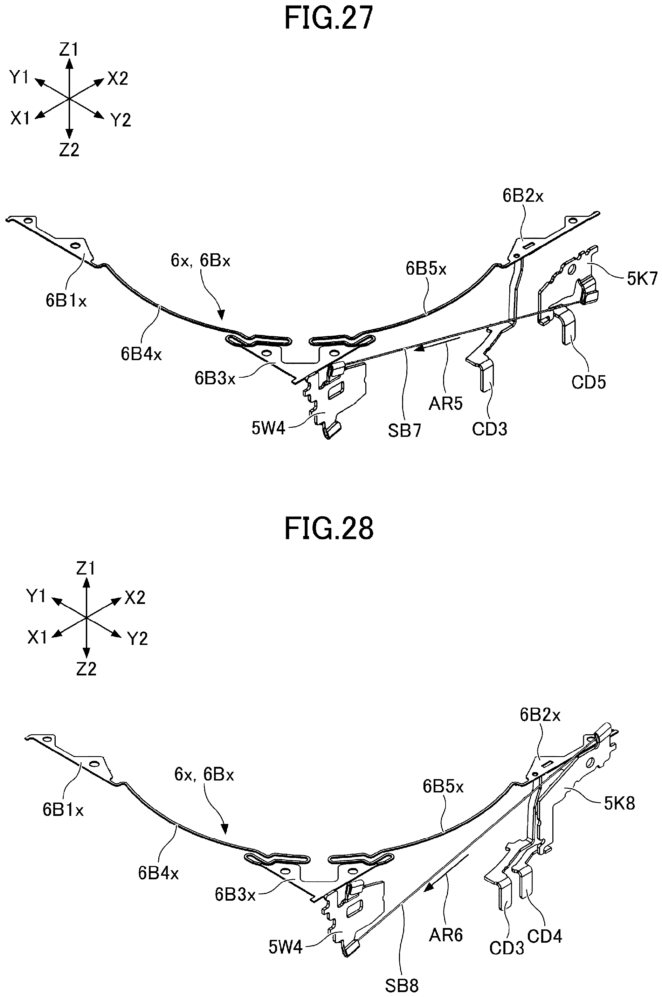

Next, the path of the current flowing through the module-side shape memory alloy wires SB will be described with reference to FIGS. 27 and 28. FIGS. 27 and 28 are partially perspective views of the configuration illustrated in FIG. 25.

Specifically, FIG. 27 illustrates the path of the current flowing through the seventh wire SB7 when the fifth current-conducting member CD5 is connected to a high potential and the third current-conducting member CD3 is connected to a low potential, and FIG. 28 illustrates the path of the current flowing through the eighth wire SB8 when the fourth current-conducting member CD4 is connected to a high potential and the third current-conducting member CD3 is connected to a low potential. Although the following description relates to the path of the current flowing through the seventh wire SB7 or the eighth wire SB8, the same applies to the path of the current flowing through the first wire SB1 or the second wire SB2, the path of the current flowing through the third wire SB3 or the fourth wire SB4, and the path of the current flowing through the fifth wire SBS or the sixth wire SB6.

When the fifth current-conducting member CD5 is connected to a high potential and the third current-conducting member CD3 is connected to a low potential, a current flows through the seventh wire SB7 as indicated by an arrow AR5 in FIG. 27. Specifically, the current flows to the third current-conducting member CD3 through the fifth current-conducting member CD5, the seventh fixed-side terminal plate 5K7, the seventh wire SB7, the fourth movable-side terminal plate 5W4, and the second leaf spring 6Bx (the third portion 6B3x, the fifth portion 6B5x, and the second portion 6B2x).

When the fourth current-conducting member CD4 is connected to a high potential and the third current-conducting member CD3 is connected to a low potential, a current flows through the eighth wire SB8 as indicated by an arrow AR6 in FIG. 28. Specifically, the current flows to the third current-conducting member CD3 through the fourth current-conducting member CD4, the eighth fixed-side terminal plate 5K8, the eighth wire SB8, the fourth movable-side terminal plate 5W4, and the second leaf spring 6Bx (the third portion 6B3x, the fifth portion 6B5x, and the second portion 6B2x).

In the illustrated example, the path of the current flowing through the seventh wire SB7 partially overlaps with the path of the current flowing through the eighth wire SB8. Specifically, the two paths of the current overlap with each other at a portion that passes through the fourth movable-side terminal plate 5W4, the second leaf spring 6Bx (the third portion 6B3x, the fifth portion 6B5x, and the second portion 6B2x), and the third current-conducting member CD3. This configuration provides the effect of reducing the number of parts.

The controller can control extension and shrinkage of each of the first wire SB1 to the eighth wire SB8 by controlling a voltage applied to each of the first fixed-side terminal plate 5K1 to the eighth fixed-side terminal plate 5K8. Alternatively, the controller can control extension and shrinkage of each of the first wire SB1 to the eighth wire SB8 by controlling a current supplied to each of the first wire SB1 to the eighth wire SB8 through the first fixed-side terminal plate 5K1 to the eighth fixed-side terminal plate 5K8.

The controller may move the lens holder 2x in a direction crossing the first direction (the direction of the optical axis) by controlling the current flowing through the plurality of module-side shape memory alloy wires SB. The direction crossing the first direction may be, for example, the second direction (the X-axis direction) perpendicular to the first direction or the third direction (the Y-axis direction) perpendicular to the first direction and the second direction. The controller may rotate the lens holder 2x about the Z axis, the X axis, or the Y axis. By such a movement of the lens holder 2x, the controller may achieve an image stabilization function.

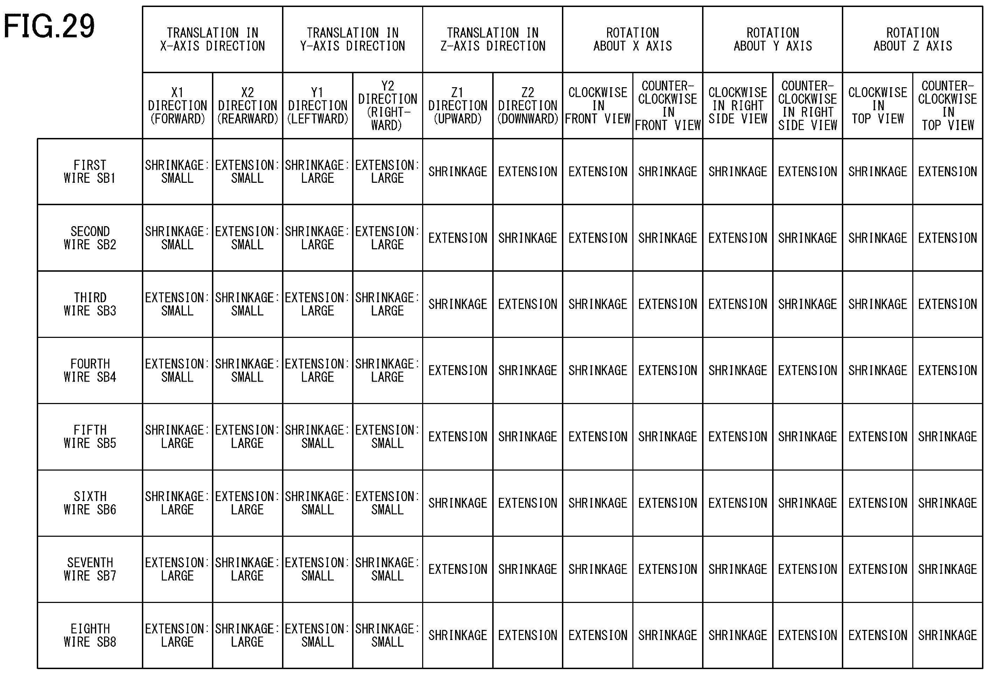

Next, details of the module-side driver DMx will be described with reference to FIG. 29. FIG. 29 is a table illustrating extension and shrinkage of the module-side shape memory alloy wires SB when each of the movements of the six degrees of freedom of the lens holder 2x is achieved. Specifically, "shrinkage" in FIG. 29 indicates shrinking the shape memory alloy wires SB that are in a reference state, and "extension" in FIG. 29 indicates extending the shape memory alloy wires SB that are in the reference state. The reference state means a state of the shape memory alloy wires SB when the camera module MD (the lens driving device LD) is in a neutral state. In the illustrated example, when the camera module MD (the lens driving device LD) is in a neutral state, each of the first wire SB1 to the eighth wire SB8 is not loosened because a current is flowing through each of the first wire SB1 to the eighth wire SB8.

When translating the lens holder 2x in the X1 direction (forward) relative to the module-side base member 8x, as illustrated in the table in FIG. 29, the controller shrinks the first wire SB1 and the second wire SB2 to a relatively small extent, extends the third wire SB3 and the fourth wire SB4 to a relatively small extent, shrinks the fifth wire SBS and the sixth wire SB6 to a relatively large extent, and extends the seventh wire SB7 and the eighth wire SB8 to a relatively large extent. Shrinking the first wire SB1 and the second wire SB2 to a relatively small extent and shrinking the fifth wire SBS and the sixth wire SB6 to a relatively large extent mean that the amount of shrinkage of each of the first wire SB1 and the second wire SB2 is smaller than the amount of shrinkage of each of the fifth wire SBS and the sixth wire SB6. Extending the third wire SB3 and the fourth wire SB4 to a relatively small extent and extending the seventh wire SB7 and the eighth wire SB8 to a relatively large extent mean that the amount of extension of each of the third wire SB3 and the fourth wire SB4 is smaller than the amount of extension of each of the seventh wire SB7 and the eighth wire SB8. In the illustrated example, the controller shrinks the first wire SB1 and the second wire SB2 to a relatively small extent by substantially the same amount of shrinkage, extends the third wire SB3 and the fourth wire SB4 to a relatively small extent by substantially the same amount of extension, shrinks the fifth wire SB5 and the sixth wire SB6 to a relatively large extent by substantially the same amount of shrinkage, and extends the seventh wire SB7 and the eighth wire SB8 to a relatively large extent by substantially the same amount of extension. The same applies in the following description. Specifically, the controller individually adjusts the magnitude of a current supplied to each of the first wire SB1 to the eighth wire SB8, thereby extending or shrinking of each of the first wire SB1 to the eighth wire SB8 in the above-described manner. By this control performed by the controller, the module-side driver DMx can translate the lens holder 2x in the X1 direction (forward) relative to the module-side base member 8x.

When translating the lens holder 2x in an X2 direction (rearward) relative to the module-side base member 8x, as illustrated in the table in FIG. 29, the controller extends the first wire SB1 and the second wire SB2 to a relatively small extent, shrinks the third wire SB3 and the fourth wire SB4 to a relatively small extent, extends the fifth wire SB5 and the sixth wire SB6 to a relatively large extent, and shrinks the seventh wire SB7 and the eighth wire SB8 to a relatively large extent. By this control performed by the controller, the module-side driver DMx can translate the lens holder 2x in the X2 direction (rearward) relative to the module-side base member 8x.

When translating the lens holder 2x in a Y1 direction (leftward) relative to the module-side base member 8x, as illustrated in the table in FIG. 29, the controller shrinks the first wire SB1 and the second wire SB2 to a relatively large extent, extends the third wire SB3 and the fourth wire SB4 to a relatively large extent, shrinks the fifth wire SB5 and the sixth wire SB6 to a relatively small extent, and shrinks the seventh wire SB7 and the eighth wire SB8 to a relatively small extent. By this control performed by the controller, the module-side driver DMx can translate the lens holder 2x in the Y1 direction (leftward) relative to the module-side base member 8x.

When translating the lens holder 2x in a Y2 direction (rightward) relative to the module-side base member 8x, as illustrated in the table in FIG. 29, the controller extends the first wire SB1 and the second wire SB2 to a relatively large extent, shrinks the third wire SB3 and the fourth wire SB4 to a relatively large extent, extends the fifth wire SB5 and the sixth wire SB6 to a relatively small extent, and shrinks the seventh wire SB7 and the eighth wire SB8 to a relatively small extent. By this control performed by the controller, the module-side driver DMx can translate the lens holder 2x in the Y2 direction (rightward) relative to the module-side base member 8x.

When translating the lens holder 2x in a Z1 direction (upward) relative to the module-side base member 8x, as illustrated in the table in FIG. 29, the controller extends the second wire SB2, the fourth wire SB4, the fifth wire SB5, and the seventh wire SB7 by substantially the same amount of extension, and shrinks the first wire SB1, the third wire SB3, the sixth wire SB6, and the eighth wire SB8 by substantially the same amount of shrinkage. By this control performed by the controller, the module-side driver DMx can translate the lens holder 2x in the Z1 direction (upward) relative to the module-side base member 8x.

When translating the lens holder 2x in a Z2 direction (downward) relative to the module-side base member 8x, as illustrated in the table of FIG. 29, the controller shrinks the second wire SB2, the fourth wire SB4, the fifth wire SB5, and the seventh wire SB7 by substantially the same amount of shrinkage, and extends the first wire SB1, the third wire SB3, the sixth wire SB6, and the eighth wire SB8 by substantially the same amount of extension. By this control performed by the controller, the module-side driver DMx can translate the lens holder 2x in the Z2 direction (downward) relative to the module-side base member 8x.

When rotating the lens holder 2x clockwise about the X axis (the second rotation axis RX2) relative to the module-side base member 8x in the front view, as illustrated in the table in FIG. 29, the controller shrinks the third wire SB3, the fourth wire SB4, the sixth wire SB6, and the seventh wire SB7 by substantially the same amount of shrinkage, and extends the first wire SB1, the second wire SB2, the fifth wire SB5, and the eighth wire SB8 by substantially the same amount of extension. By this control performed by the controller, the module-side driver DMx can rotate the lens holder 2x clockwise about the X axis (the second rotation axis RX2) relative to the module-side base member 8x.

When rotating the lens holder 2x counterclockwise about the X axis (the second rotation axis RX2) relative to the module-side base member 8x in the front view, as illustrated in the table in FIG. 29, the controller extends the third wire SB3, the fourth wire SB4, the sixth wire SB6, and the seventh wire SB7 by substantially the same amount of extension, and shrinks the first wire SB1, the second wire SB2, the fifth wire SB5, and the eighth wire SB8 by substantially the same amount of shrinkage. By this control performed by the controller, the module-side driver DMx can rotate the lens holder 2x counterclockwise about the X axis (the second rotation axis RX2) relative to the module-side base member 8x.

When rotating the lens holder 2x clockwise about the Y axis (the third rotation axis RX3) relative to the module-side base member 8x in the right side view, as illustrated in the table of FIG. 29, the controller shrinks the first wire SB1, the fourth wire SB4, the seventh wire SB7, and the eighth wire SB8 by substantially the same amount of shrinkage, and extends the second wire SB2, the third wire SB3, the fifth wire SB5, and the sixth wire SB6 by substantially the same amount of extension. By this control performed by the controller, the module-side driver DMx can rotate the lens holder 2x clockwise about the Y axis (the third rotation axis RX3) relative to the module-side base member 8x.

When rotating the lens holder 2x counterclockwise about the Y axis (the third rotation axis RX3) relative to the module-side base member 8x in the right side view, as illustrated in the table in FIG. 29, the controller extends the first wire SB1, the fourth wire SB4, the seventh wire SB7, and the eighth wire SB8 by substantially the same amount of extension, and shrinks the second wire SB2, the third wire SB3, the fifth wire SB5, and the sixth wire SB6 by substantially the same amount of shrinkage. By this control performed by the controller, the module-side driver DMx can rotate the lens holder 2x counterclockwise about the Y axis (the third rotation axis RX3) relative to the module-side base member 8x.

When rotating the lens holder 2x clockwise about the Z axis (the first rotation axis RX1) relative to the module-side base member 8x in the top view, as illustrated in the table in FIG. 29, the controller shrinks the first wire SB1 to the fourth wire SB4 by substantially the same amount of shrinkage, and extends the fifth wire SB5 to the eighth wire SB8 by substantially the same amount of extension. By this control performed by the controller, the module-side driver DMx can rotate the lens holder 2x clockwise about the Z axis (the first rotation axis RX1) relative to the module-side base member 8x.

When rotating the lens holder 2x counterclockwise about the Z axis (the first rotation axis RX1) relative to the module-side base member 8x in the top view, as illustrated in the table in FIG. 29, the controller extends the first wire SB1 to the fourth wire SB4 by substantially the same amount of extension, and shrinks the fifth wire SB5 to the eighth wire SB8 by substantially the same amount of shrinkage. By this control performed by the controller, the module-side driver DMx can rotate the lens holder 2x counterclockwise about the Z axis (the first rotation axis RX1) relative to the module-side base member 8x.

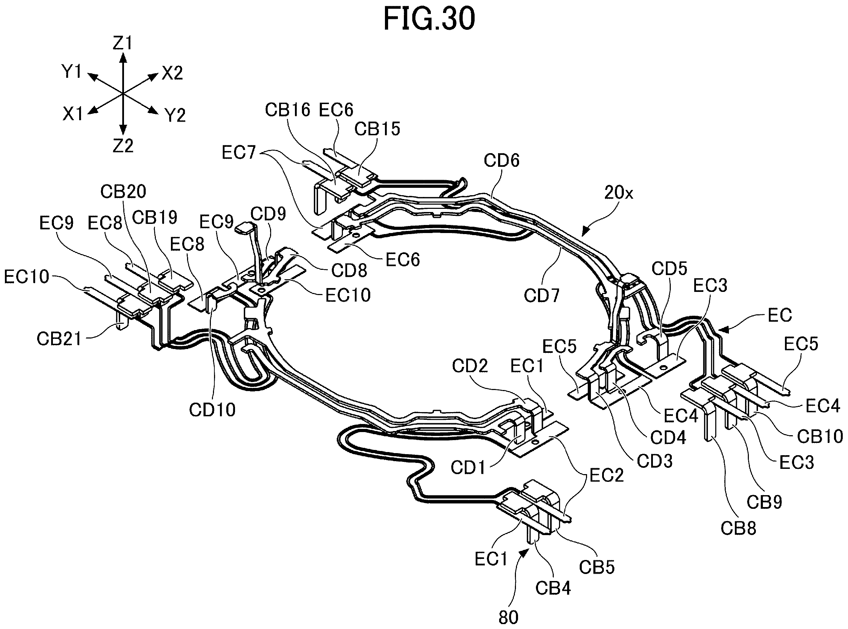

Next, a positional relationship between the module-side embedded current-conducting member 20x embedded in the module-side fixed member FBx (the module-side base member 8x), the third embedded current-conducting member 80 embedded in the fixed-side member FB (the base member 8), and the intermediate current-conducting member EC used for conducting a current between the module-side embedded current-conducting member 20x and the third embedded current-conducting member 80 will be described with reference to FIG. 30. FIG. 30 is a perspective view of the module-side embedded current-conducting member 20x, the third embedded current-conducting member 80, and the intermediate current-conducting member EC. For ease of understanding, FIG. 30 omits illustration of the current-conducting members of the third embedded current-conducting member 80 that are not connected to the module-side embedded current-conducting member 20x (the first current-conducting member CB1 to the third current-conducting member CB3, the sixth current-conducting member CB6, the seventh current-conducting member CB7, the 11^{th} current-conducting member CB11 to the 14^{th} current-conducting member CB14, the 17^{th} current-conducting member CB17, the 18^{th} current-conducting member CB18, and the 22^{nd} current-conducting member CB22).

In the illustrated example, ten current-conducting members (the first current-conducting member CD1 to the tenth current-conducting member CD10) forming the module-side embedded current-conducting member 20x are connected to the third embedded current-conducting member 80 via the intermediate current-conducting member EC.

Specifically, the first current-conducting member CD1 is connected to the fourth current-conducting member CB4 via the first intermediate current-conducting member EC1, the second current-conducting member CD2 is connected to the fifth current-conducting member CB5 via the second intermediate current-conducting member EC2, the third current-conducting member CD3 is connected to the ninth current-conducting member CB9 via the fourth intermediate current-conducting member EC4, the fourth current-conducting member CD4 is connected to the tenth current-conducting member CB10 via the fifth intermediate current-conducting member EC5, and the fifth current-conducting member CD5 is connected to the eighth current-conducting member CB8 via the third intermediate current-conducting member EC3. The sixth current-conducting member CD6 is connected to the 15^{th} current-conducting member CB15 via the sixth intermediate current-conducting member EC6, the seventh current-conducting member CD7 is connected to the 16^{th} current-conducting member CB16 via the seventh intermediate current-conducting member EC7, the eighth current-conducting member CD8 is connected to the 20^{th} current-conducting member CB20 via the ninth intermediate current-conducting member EC9, the ninth current-conducting member CD9 is connected to the 21^{st} current-conducting member CB21 via the tenth intermediate current-conducting member EC10, and the tenth current-conducting member CD10 is connected to the 19^{th} current-conducting member CB19 via the eighth intermediate current-conducting member EC8.

With this configuration, each of the first wire SB1 to the eighth wire SB8 can be electrically connected to a corresponding conductive pattern formed on the external circuit board via the module-side embedded current-conducting member 20x, the intermediate current-conducting member EC, and the third embedded current-conducting member 80. Therefore, the lens driving device LD can receive a supply of a current flowing through each of the first wire SB1 to the eighth wire SB8 via the external circuit board.

According to the above-described configuration, the controller can achieve the movements of the six degrees of freedom of the lens holder 2x. Specifically, the controller individually adjusts the current supplied to each of the first wire SB1 to the eighth wire SB8, thereby achieving each of the movements of the six degrees of freedom. The controller may achieve the movement of the lens holder 2x by combining two or more of the movements of the six degrees of freedom. In the illustrated example, the controller causes a current to flow to one or more of the first wire SB1 to the eighth wire SB8, thereby shrinking corresponding ones of the module-side shape memory alloy wires SB and moving the lens holder 2x. The controller achieves the extension of the module-side shape memory alloy wires SB because one or more different wires of the first wire SB1 to the eighth wire SB8 are extended by the movement of the lens holder 2x.

In the illustrated example, the module holder 2 can achieve the movements of three degrees of freedom (the rotation about the X axis, the rotation about the Y axis, and the rotation about the Z axis). Thus, as long as the lens body LS is translatable along the X-axis direction, the Y-axis direction, and the Z-axis direction, the lens body LS in the camera module MD held by the module holder 2 can achieve the movements of the six degrees of freedom. That is, the combination of the driver DM in the module driving device 100 and the module-side driver DMx in the camera module MD can achieve the movements of the six degrees of freedom of the lens body LS. Therefore, the module-side driver DMx may be configured so as not to utilize the movements of the three degrees of freedom (the rotation about the X axis, the rotation about the Y axis, and the rotation about the Z axis).

The movement of the movable-side member MB may be detected by an unillustrated movement detector. The movement detector may be configured, for example, by: a magnet attached to the movable-side member MB, such as the module holder 2 or the like; and a magnetic sensor attached to the fixed-side member FB, such as the base member 8 or the like. The movement of the module-side movable member MBx may be detected by an unillustrated module-side movement detector. The module-side movement detector may be configured, for example, by: a magnet attached to the module-side movable member MBx, such as the lens holder 2x or the like; and a magnetic sensor attached to the module-side fixed member FBx, such as the module-side base member 8x or the like.

The magnetic sensor may be configured to detect the position of the movable-side member MB (the module-side movable member MBx) by detecting the position of the magnet. The magnetic sensor may be configured to detect the position of the movable-side member MB (the module-side movable member MBx) by using a Hall element. However, the magnetic sensor may be configured to detect the position of the movable-side member MB (the module-side movable member MBx) by using a magnetoresistive element configured to detect a magnetic field generated by a magnet, such as a giant magneto resistive effect (GMR) element, a semiconductor magneto resistive (SMR) element, an anisotropic magneto resistive (AMR) element, a tunnel magneto resistive (TMR) element, or the like.

As described above, the module driving device 100 according to the embodiment of the present disclosure includes: the module holder 2 configured to hold the camera module MD, which is an optical module including the lens body LS and the imaging element IS; the connection member 3 connected to the module holder 2 such that the module holder 2 is rockable about the first axial line (the axial line of the third rotation axis RX3) that crosses the direction of the optical axis; the fixed-side member FB (the base member 8) connected to the connection member 3 such that the connection member 3 is rockable about the second axial line (the axial line of the second rotation axis RX2) that is perpendicular to the axial line direction of the first axial line; and the driver DM configured to move the module holder 2 relative to the fixed-side member FB.

The module holder 2 and the connection member 3, the connection member 3 and the fixed-side member FB, or both the module holder 2 and the connection member 3 and the connection member 3 and the fixed-side member FB are connected via the two first rotating bodies (the first rotating bodies Q1 or the second rotating bodies Q2) that are disposed so as to face each other across the optical axis OA. In this case, two corresponding members connected via the two first rotating bodies may be configured so as to be rotatable relative to each other about the optical axis OA.

In the example illustrated in FIG. 3, the module holder 2 and the connection member 3 are connected via the two first rotating bodies Q1 (the first left-side rotating body Q1L and the first right-side rotating body Q1R) that are disposed so as to face each other across the optical axis OA. The module holder 2 and the connection member 3, connected via the two first rotating bodies Q1, are configured so as to be rotatable relative to each other about the optical axis OA.

With this configuration, it is possible to prevent a structure from becoming complicated while enabling rocking and rotation of one of the two members connected via the first rotating bodies Q1. That is, this configuration can achieve a relatively simple structure compared to, for example, a structure that includes a rotation support mechanism and a gimbal mechanism as separate mechanisms.

At least one of the module holder 2 or the connection member 3 facing each other across the two first rotating bodies Q1 may be provided with first grooves G1 each having a shape of an arc centered on the optical axis OA. In the illustrated example, the first grooves G1 (the first left groove G1L and the first right groove G1R), each having a shape of an arc centered on the optical axis OA, are formed in the module holder 2 that is disposed below the first rotating bodies Q1, as illustrated in FIG. 5. However, the first grooves G1 may be formed in the connection member 3 that is disposed above the first rotating bodies Q1, and may be formed in both of the module holder 2 and the connection member 3. This configuration provides the effect of being able to achieve, in a simple structure: rocking of the module holder 2 relative to the connection member 3 about the third rotation axis RX3; and rotation of the module holder 2 relative to the connection member 3 about the optical axis.

The connection member 3 and the fixed-side member FB (the base member 8) may be connected via the two second rotating bodies Q2, which are disposed so as to face each other across the optical axis OA. At least one of the connection member 3 or the fixed-side member FB (the base member 8), which are disposed so as to face each other across the two second rotating bodies Q2, may be provided with the second grooves G2 each having a shape of an arc centered on the optical axis OA. In the illustrated example, the second grooves G2 (the second front groove G2F and the second rear groove G2B), each having a shape of an arc centered on the optical axis OA, are formed in the base member 8 that is disposed below the second rotating bodies Q2, as illustrated in FIG. 9. However, the second grooves G2 may be formed in the connection member 3 that is disposed above the second rotating bodies Q2, or may be formed in both of the connection member 3 and the base member 8.

This configuration provides the effect of being able to achieve, in a simple structure: rocking of the connection member 3 relative to the base member 8 about the second rotation axis RX2; and rotation of the connection member 3 relative to the base member 8 about the optical axis. Also, this configuration provides the effect of being able to increase the amount of rotation (the rotation amount or the rotation angle) of the module holder 2 relative to the base member 8 about the optical axis by combination with the configuration in which the module holder 2 and the connection member 3 are disposed so as to face each other across the two first rotating bodies Q1.

The connection member 3 may be provided with the first recesses H1 configured to hold the first rotating bodies Q1 and the second recesses H2 configured to hold the second rotating bodies Q2. This configuration provides the effect of being able to simplify the structure of the guide mechanism GM.

Both of the first recesses H1 and the second recesses H2 may be provided on the lower-surface side (the same surface side) of the connection member 3. This configuration provides the effect of being able to facilitate the attaching of the connection member 3 to the module holder 2 and the base member 8, and improve the ease of the assembly of the module driving device 100.

When the lens body LS is disposed on the upper side and the imaging element IS is disposed on the lower side, the connection member 3 may include a portion disposed on the upper side of the fixed-side member FB (the base member 8). In this case, the module holder 2 may include a portion disposed on the lower side of the connection member **3.** The first rotating bodies Q1 and the second rotating bodies Q2 may be disposed on the lower side of the connection member 3.

In the illustrated example, the first recesses H1 (the first left recess H1L and the first right recess H1R) configured to hold the first rotating bodies Q1 (the first left-side rotating body Q1L and the first right-side rotating body Q1R) and the second recesses H2 (the second front recess H2F and the second rear recess H2B) configured to hold the second rotating bodies Q2 (the second front-side rotating body Q2F and the second rearside rotating body Q2B) are provided on the lower side (Z2 side) of the connection member 3, as illustrated in FIG. 7.

With this configuration, the position (height) of the first rotating bodies Q1 and the position (height) of the second rotating bodies Q2 in the Z-axis direction can be made equal to or close to each other, and space utilization efficiency in the module driving device 100 can be increased. Therefore, this configuration provides the effect of being able to reduce the length (height) of the module driving device 100 in the Z-axis direction.

The connection member 3 and the module holder 2 may be provided with the first magnet MG1 and the second magnet MG2 that are disposed so as to attract each other across the first rotating body Q1. The connection member 3 and the fixed-side member FB (the base member 8) may be provided with the third magnet MG3 and the fourth magnet MG4 that are disposed to attract each other across the second rotating body Q2.

In the illustrated example, the module holder 2 is provided with the second magnet MG2 as illustrated in FIG. 4, the connection member 3 is provided with the first magnet MG1 and the third magnet MG3 as illustrated in FIG. 6, and the base member 8 is provided with the fourth magnet MG4 as illustrated in FIG. 8. This configuration can prevent the module holder 2, the connection member 3, and the base member 8 from being separated from each other. Therefore, this configuration provides the effect of being able to stabilize rocking and rotation of the module holder 2 relative to the connection member 3, and stabilize rocking and rotation of the connection member 3 relative to the base member 8.

The first rotating body Q1 and the second rotating body Q2 may be formed of a magnetic material (metal). This configuration can increase the attractive force between the module holder 2 and the connection member 3, and the attractive force between the connection member 3 and the base member 8, compared to a case in which the first rotating body Q1 and the second rotating body Q2 are formed of a non-magnetic material. This is because the first rotating body Q1 can attract the first magnet MG1 and the second magnet MG2, and the second rotating body Q2 can attract the third magnet MG3 and the fourth magnet MG4. Therefore, this configuration provides the effect of being able to suppress separation of the module holder 2, the connection member 3, and the base member 8 from each other when the module driving device 100 experiences an impact due to a drop or the like.

The driver DM may be configured to include the plurality of shape memory alloy wires SA that are provided between the movable-side member MB, including the module holder 2 and the connection member 3, and the fixed-side member FB (the base member 8). This configuration provides the effect of being able to reduce the size of the module driving device 100 compared to a case in which the driver is configured using a magnet and a coil.

The driver DM may include the plurality of first shape memory alloy wires SC1 that are provided between the first movable portion MB1, including the module holder 2, and the second movable portion MB2, including the connection member 3. The plurality of shape memory alloy wires SA provided between the movable-side member MB and the fixed-side member FB (the base member 8) may be configured by the plurality of second shape memory alloy wires SC2 that are provided between the second movable portion MB2 and the fixed-side member FB (the base member 8). In the illustrated example, the plurality of first shape memory alloy wires SC1 are the first wire SA1 to the fourth wire SA4, and the plurality of second shape memory alloy wires SC2 are the fifth wire SA5 to the eighth wire SA8. This configuration provides the effect of facilitating the control of the movement of the connection member 3 relative to the base member 8 and the control of the movement of the module holder 2 relative to the connection member 3. This is because the shape memory alloy wires SA used for achieving the movement of the connection member 3 relative to the base member 8 can be separated from the shape memory alloy wires SA used for achieving the movement of the module holder 2 relative to the connection member 3.

Two of the first shape memory alloy wires SC1 may be disposed at two positions that are apart from each other in the axial line direction (the X-axis direction) of the second axial line (the axial line of the second rotation axis RX2) across the module holder 2. These two of the first shape memory alloy wires SC1 may cross each other as viewed along the axial line direction of the second axial line. Two of the second shape memory alloy wires SC2 may be disposed at two positions that are apart from each other in the axial line direction (the Y-axis direction) of the first axial line (the axial line of the third rotation axis RX3) across the module holder 2. These two of the second shape memory alloy wires SC2 may cross each other as viewed along the axial line direction of the first axial line.

In the example illustrated in FIG. 3, the first wire SA1 and the second wire SA2, which are two of the first shape memory alloy wires SC1 located on the front side (X1 side) of the module holder 2, cross each other as viewed along the X-axis direction, and the third wire SA3 and the fourth wire SA4, which are two of the first shape memory alloy wires SC1 located on the rear side (X2 side) of the module holder 2, cross each other as viewed along the X-axis direction. The fifth wire SA5 and the sixth wire SA6, which are two of the second shape memory alloy wires SC2 located on the left side (Y1 side) of the module holder 2, cross each other as viewed along the Y-axis direction, and the seventh wire SA7 and the eighth wire SA8, which are two of the second shape memory alloy wires SC2 located on the right side (Y2 side) of the module holder 2, cross each other as viewed along the Y-axis direction.

This configuration provides the effect of further facilitating the control of the movement of the connection member 3 relative to the base member 8 and the control of the movement of the module holder 2 relative to the connection member 3. This is because this configuration achieves rocking and rotation of the module holder 2 relative to the connection member 3 by the same shape memory alloy wires SA (the first shape memory alloy wires SC1). This is also because this configuration achieves rocking and rotation of the connection member 3 relative to the base member 8 by the same shape memory alloy wires SA (the second shape memory alloy wire SC2).

The camera module MD, which is an example of the optical module, may include the module-side fixed member FBx (the module-side base member 8x), the lens holder 2x configured to hold the lens body LS, and the module-side driver DMx configured to move the lens holder 2x relative to the module-side fixed member FBx (the module-side base member 8x).

In this case, the module-side driver DMx may include the plurality of module-side shape memory alloy wires SB that are provided between the module-side movable member MBx, including the lens holder 2x, and the module-side fixed member FBx (the module-side base member 8x).

The plurality of module-side shape memory alloy wires SB may include: two of the third shape memory alloy wires SC3 disposed at two positions that are apart from each other in the axial line direction (the X-axis direction) of the second axial line (the axial line of the second rotation axis RX2) across the lens holder 2x; and two of the fourth shape memory alloy wires SC4 disposed at two positions that are apart from each other in the axial line direction (the Y-axis direction) of the first axial line (the axial line of the third rotation axis RX3) across the lens holder 2x.

The two of the third shape memory alloy wires SC3 may cross each other as viewed along the axial line direction (the X-axis direction) of the second axial line, and the two of the fourth shape memory alloy wires SC4 may cross each other as viewed along the axial line direction (the Y-axis direction) of the first axial line.

In the example illustrated in FIG. 24, the first wire SB1 and the second wire SB2, which are two of the third shape memory alloy wires SC3 located on the front side (X1 side) of the lens holder 2x, cross each other as viewed along the X-axis direction, and the third wire SB3 and the fourth wire SB4, which are two of the third shape memory alloy wires SC3 located on the rear side (X2 side) of the lens holder 2x, cross each other as viewed along the X-axis direction. The fifth wire SB5 and the sixth wire SB6, which are two of the fourth shape memory alloy wires SC4 located on the left side (Y1 side) of the lens holder 2x, cross each other as viewed along the Y-axis direction, and the seventh wire SB7 and the eighth wire SB8, which are two of the fourth shape memory alloy wires SC4 located on the right side (Y2 side) of the lens holder 2x, cross each other as viewed along the Y-axis direction.

This configuration provides the effect of being able to reduce the size of the camera module MD and hence reduce the size of the module driving device 100, compared to a case in which the module-side driver DMx is configured using a magnet and a coil.

The optical device according to the embodiment of the present disclosure may include: the lens holder 2x configured to hold the lens body LS; the imaging element holder AD provided so as to be immovable relative to the imaging element IS that is disposed to face the lens body LS; the module-side driver DMx configured to move the lens holder 2x relative to the module-side fixed member FBx including the imaging element holder AD; the module holder 2 configured to hold the module-side fixed member FBx; the connection member 3 connected to the module holder 2 such that the module holder 2 is rockable about the first axial line (the axial line of the third rotation axis RX3) that crosses the direction of the optical axis; the fixed-side member FB (the base member 8) connected to the connection member 3 such that the connection member 3 is rockable about the second axial line (the axial line of the second rotation axis RX2) that is perpendicular to the axial line direction of the first axial line (the Y-axis direction); and the driver DM configured to move the module holder 2 relative to the fixed-side member FB (the base member 8).

The module holder 2 and the connection member 3, the connection member 3 and the fixed-side member FB (the base member 8), or both the module holder 2 and the connection member 3 and the connection member 3 and the fixed-side member FB (the base member 8) may be connected via the two rotating bodies (the first rotating bodies Q1 or the second rotating bodies Q2) that are disposed so as to face each other across the optical axis OA. The two corresponding members connected via the first rotating bodies may be configured to be rotatable relative to each other about the optical axis OA.

The module driving device 100 according to the embodiment of the present disclosure may include: the fixed-side member FB (the base member 8); the module holder 2 configured to hold the optical module (the camera module MD) including the lens body LS and the imaging element IS and to be movable relative to the fixed-side member FB (the base member 8); the guide mechanism GM configured to guide the rotation of the module holder 2 about the optical axis OA of the lens body LS; the driver DM configured to rotate the module holder 2 about the optical axis OA; and the connection member 3. The driver DM may include the plurality of shape memory alloy wires SA that are provided between the movable-side member MB, including the module holder 2, and the fixed-side member FB (the base member 8). The connection member 3 may be connected to the module holder 2 at the plurality of first engagement portions V1 and connected to the fixed-side member FB (the base member 8) at the plurality of second engagement portions V2. The guide mechanism GM may be provided between the module holder 2 and the first engagement portions V1, between the fixed-side member FB (the base member 8) and the second engagement portions V2, or both between the module holder 2 and the first engagement portions V1 and between the fixed-side member FB (the base member 8) and the second engagement portions V2, such that the module holder 2 is rotatable about the optical axis OA.

In the illustrated example, the guide mechanism GM includes: the first guide mechanism GM1 provided between the engagement portion 2T of the module holder 2 and the first engagement portion V1 of the connection member 3; and the second guide mechanism GM2 provided between the engagement portion 8T of the base member 8 and the second engagement portion V2 of the connection member 3.

In the above-described embodiments, as illustrated in FIG. 11, the first guide mechanism GM1 includes: the first groove G1 formed at the upper end surface of the engagement portion 2T of the module holder 2; the first recess H1 formed at the lower end surface of the first engagement portion V1 of the connection member 3; and the first rotating body Q1. However, the first guide mechanism GM1 may be configured, without any rotating body, by: a projection (e.g., a hemispherical projection) provided in one of the module holder 2 or the connection member 3; and a recess (e.g., a recess having a U-shaped cross section) provided in the other of the module holder 2 or the connection member 3. In this case, the module holder 2 and the connection member 3 become rotatable relative to each other due to sliding of the projection in the recess. The same applies to the second guide mechanism GM2.

With this configuration, it is possible to prevent a structure from becoming complicated while enabling rotation of one of the two members connected via the guide mechanism GM. That is, this configuration can achieve, in a relatively simple structure, the rotation of one of the two members connected via the guide mechanism GM. Therefore, this configuration can reduce the size of the module driving device 100.

The module holder 2 may be configured to be rotatable about the optical axis OA between the module holder 2 and the first engagement portion V1 of the connection member 3. In the illustrated example, the first guide mechanism GM1 enables the module holder 2 to rotate about the optical axis OA between the module holder 2 and the first engagement portion V1 of the connection member 3. Specifically, the module holder 2 includes the engagement portion 2T corresponding to the first engagement portion V1 of the connection member 3. The first guide mechanism GM1 includes: the first groove G1 (see FIG. 5) formed at the upper surface of the engagement portion 2T; the first recess H1 (see FIG. 7) formed at the lower surface of the first engagement portion V1; and the first rotating body Q1 (see FIG. 6) disposed between the first groove G1 and the first recess H1. This configuration can relatively readily achieve the relative rotation between the module holder 2 and the connection member 3 that are connected via the first guide mechanism GM1.

The connection member 3 may be configured to be rotatable about the optical axis OA both between the module holder 2 and the first engagement portion V1 and between the fixed-side member FB (the base member 8) and the second engagement portion V2.

In the illustrated example, the first guide mechanism GM1 and the second guide mechanism GM2 enable the connection member 3 to rotate about the optical axis OA both between the module holder 2 and the first engagement portion V1 and between the fixed-side member FB (the base member 8) and the second engagement portion V2. Specifically, the base member 8 includes the engagement portion 8T corresponding to the second engagement portion V2 of the connection member 3. The second guide mechanism GM2 includes: the second groove G2 (see FIG. 9) formed at the upper surface of the engagement portion 8T; the second recess H2 (see FIG. 7) formed at the lower surface of the second engagement portion V2; and the second rotating body Q2 (see FIG. 8) disposed between the second groove G2 and the second recess H2.

This configuration provides the effect of being able to increase a rotation range (rotation angle) compared to a case in which the connection member 3 is configured to be rotatable about the optical axis OA either between the module holder 2 and the first engagement portion V1 or between the fixed-side member FB (the base member 8) and the second engagement portion V2.

The first engagement portion V1 may be provided at two positions that face each other across the optical axis OA and are along the first axial line (the axial line of the third rotation axis RX3). The second engagement portion V2 may be provided at two positions that face each other across the optical axis OA and are along the second axial line (the axial line of the second rotation axis RX2). As viewed along the direction of the optical axis (in the top view), the first axial line and the second axial line may be disposed so as to be orthogonal to each other. In this case, the first shape memory alloy wires SC1 may be disposed at two positions that are apart from each other in the axial line direction of the second axial line (the X-axis direction) across the module holder 2, and the second shape memory alloy wires SC2 may be disposed at two positions that are apart from each other in the axial line direction of the first axial line (the Y-axis direction) across the module holder 2.

In this configuration, the two members are connected via the guide mechanism GM at two positions that are across the optical axis OA, and thus the relative rotation between the two members can be stabilized. This configuration provides the effect of being able to achieve rocking of the other of the two members relative to one of the two members.

Two of the first shape memory alloy wires SC1 may be disposed at two positions that are apart from each other in the axial line direction (the X-axis direction) of the second axial line (the axial line of the second rotation axis RX2), and these two of the first shape memory alloy wires SC1 may cross each other as viewed along the axial line direction (the X-axis direction) of the second axial line, and may form a first wire pair. Two of the second shape memory alloy wires SC2 are disposed at two positions that are apart from each other in the axial line direction (the Y-axis direction) of the first axial line (the axial line of the third rotation axis RX3), and these two of the second shape memory alloy wires SC2 may cross each other as viewed along the axial line direction (the Y-axis direction) of the first axial line, and may form a second wire pair.

In the illustrated example, the two of the first shape memory alloy wires SC1 forming the first wire pair are a combination of the first wire SA1 and the second wire SA2, and a combination of the third wire SA3 and the fourth wire SA4. The two of the second shape memory alloy wires SC2 forming the second wire pair are a combination of the fifth wire SA5 and the sixth wire SA6, and a combination of the seventh wire SA7 and the eighth wire SA8.

This configuration enables longer shape memory alloy wires SA to be disposed, compared to a case in which the two of the shape memory alloy wires SA are disposed so as not to cross each other. Therefore, in this configuration, the driving force generated by the driver DM can be increased. In this configuration, the shape memory alloy wires SA are disposed so as to be oblique to an XY plane. Therefore, this configuration provides the effect of facilitating relative rocking of the two members connected via the guide mechanism GM, compared to a case in which the shape memory alloy wires SA are disposed in parallel with the XY plane.

The ends of the two first shape memory alloy wires SC1 forming the first wire pair may be electrically connected to each other. The ends of the two second shape memory alloy wires SC2 forming the second wire pair may be electrically connected to each other.

This configuration can partially overlap the paths of the current flowing through the two shape memory alloy wires SA. Therefore, this configuration provides the effect of being able to simplify the structure of the module driving device 100.

The first movable portion MB1 including the module holder 2 may include first metal members (the first lower terminal plate 5F1 to the fourth lower terminal plate 5F4) to which the ends of the first shape memory alloy wire SC1 are to be fixed. The second movable portion MB2 including the connection member 3 may include: second metal members (the first upper terminal plate 5M1 to the fourth upper terminal plate 5M4) to which the other ends of the first shape memory alloy wires SC1 are to be fixed; and third metal members (the fifth upper terminal plate 5M5 to the eighth upper terminal plate 5M8) to which the ends of the second shape memory alloy wires SC2 are to be fixed. The fixed-side member FB (the base member 8) may include fourth metal members (the fifth lower terminal plate 5F5 to the eighth lower terminal plate 5F8) to which the other ends of the second shape memory alloy wires SC2 are to be fixed. When the module holder 2 is in the neutral position, the first metal members (the first lower terminal plate 5F1 to the fourth lower terminal plate 5F4) and the second metal members (the first upper terminal plate 5M1 to the fourth upper terminal plate 5M4) may include the plates PM that are disposed substantially parallel to each other, and the third metal members (the fifth upper terminal plate 5M5 to the eighth upper terminal plate 5M8) and the fourth metal members (the fifth lower terminal plate 5F5 to the eighth lower terminal plate 5F8) may include the plates PM (see FIG. 9) that are disposed substantially parallel to each other.

With this configuration, the plurality of metal members 5, to which the shape memory alloy wires SA are fixed, can be simultaneously attached to corresponding members. Further, this configuration provides the effect of being able to improve the ease of assembly of the module driving device 100.

The module holder 2 may be provided with a current-conducting member (the first embedded current-conducting member 20) used for conducting a current through at least one of the first shape memory alloy wire SC1 or the second shape memory alloy wire SC2. In the illustrated example, the first embedded current-conducting member 20 is embedded in the module holder 2 through insert molding. This configuration provides the effect of facilitating the formation of a conductive path leading to the shape memory alloy wires SA.

The module driving device 100 may include: the first conductive member 6, in the form of a leaf spring of a metal, provided so as to connect the module holder 2 and the connection member 3; the second conductive member 7, in the form of a leaf spring of a metal, provided so as to connect the connection member 3 and the fixed-side member FB (the base member 8); and the third conductive member 9, in the form of a leaf spring of a metal, provided so as to connect the module holder 2 and the fixed-side member FB (the base member 8). In this case, each of the first conductive member 6, the second conductive member 7, and the third conductive member 9 may form a conductive path that is electrically connected to at least corresponding one of the first shape memory alloy wires SC1 and the second shape memory alloy wires SC2. This configuration provides the effect of facilitating the formation of a conductive path leading to the shape memory alloy wires SA.

Two of the first conductive member 6, the second conductive member 7, and the third conductive member 9, and the remaining one of the first conductive member 6, the second conductive member 7, and the third conductive member 9 may be provided so as to face each other across the connection member 3 in the direction of the optical axis. This configuration provides the effect of being able to suppress interference between the conductive members.

The guide mechanism GM may include the first guide mechanism GM1 and the second guide mechanism GM2. In this case, the first guide mechanism GM1 may include: the first rotating bodies Q1 provided between the module holder 2 and each of the plurality of first engagement portions V1 of the connection member 3; and the first grooves G1 that are provided in at least one of the module holder 2 or the connection member 3, facing each other across the first rotating bodies Q1, and have a shape of an arc centered on the optical axis OA. The second guide mechanism GM2 may include: the second rotating bodies Q2 provided between the fixed-side member FB (the base member 8) and each of the plurality of second engagement portions V2 of the connection member 3; and the second grooves G2 that are provided in at least one of the fixed-side member FB (the base member 8) and the connection member 3, facing each other across the second rotating bodies Q2, and have a shape of an arc centered on the optical axis OA. The first rotating bodies Q1 and the second rotating bodies Q2 may be provided below the connection member 3. In this configuration, the first rotating bodies Q1 can roll in the first grooves G1, and the second rotating bodies Q2 can roll in the second grooves G2. Therefore, this configuration provides the effect of being able to smoothen: the relative rotation between the module holder 2 and the connection member 3; and the relative rotation between the connection member 3 and the base member 8.

The optical device according to the embodiment of the present disclosure may include: the lens holder 2x configured to hold the lens body LS; the imaging element holder AD provided so as to be immovable relative to the imaging element IS that is disposed to face the lens body LS; the module-side driver DMx configured to move the lens holder 2x relative to the module-side fixed member FBx including the imaging element holder AD; the module holder 2 configured to hold the module-side fixed member FBx and to be movable relative to the fixed-side member FB; the guide mechanism GM configured to guide the rotation of the module holder 2 about the optical axis OA of the lens body LS; the driver DM configured to move the module holder 2 about the optical axis OA; and the connection member 3.

In this case, the driver DM may include the plurality of shape memory alloy wires SA that are provided between the movable-side member MB, including the module holder 2, and the fixed-side member FB (the base member 8). The connection member 3 may be connected to the module holder 2 at the plurality of first engagement portions V1, and may be connected to the fixed-side member FB (the base member 8) at the plurality of second engagement portions V2. The guide mechanism GM may be provided such that the module holder 2 is rotatable about the optical axis OA between the module holder 2 and the first engagement portion V1, between the fixed-side member FB (the base member 8) and the second engagement portion V2, or both between the module holder 2 and the first engagement portion V1 and between the fixed-side member FB (the base member 8) and the second engagement portion V2. This configuration can avoid a complicated structure for achieving the rotation of the module holder 2. That is, this configuration can achieve the rotation of the module holder 2 in a relatively simple structure.

The preferred embodiments of the present invention have been described above in detail. However, the present invention is not limited to the above-described embodiments. Various modifications, substitutions, and the like may be applicable to the above- and below-described embodiments without departing from the scope of the present invention. The features described with reference to the above- and below-described embodiments may be appropriately combined as long as there is no technical contradiction.

For example, in the above-described embodiments, the metal member 5 is adhesively fixed to the members (the module holder 2, the connection member 3, and the base member 8); however, the metal member 5 may be embedded in the members or may be a conductive pattern formed on the surface of the members.

In the above-described embodiments, the module holder 2 is integrally formed with the cover member of the lens driving device LD, which is a part of the module-side fixed member FBx forming the camera module MD. That is, the module holder 2 functions as a part of the module-side fixed member FBx forming the camera module MD. However, the cover member of the lens driving device LD may be a member that is separate from the module holder 2. In this case, the cover member of the lens driving device LD may be fixed to the module holder 2 with an adhesive or the like. Alternatively, the module holder 2 may be integrally formed with another member of the module-side fixed member FBx forming the camera module MD. For example, the module holder 2 may be integrally formed with the module-side base member 8x forming the camera module MD.

In the above-described embodiments, the module-side base member 8x, the imaging element holder AD, and the spacer SP, forming the module-side fixed member FBx, are formed as separate and independent members. However, at least one of the imaging element holder AD or the spacer SP may be integrated with the module-side base member 8x.

This application claims priority to Japanese Patent Application No. 2022-080481, filed on May 16, 2022, and the entire contents of this Japanese patent application are incorporated herein by reference.

### REFERENCE SIGNS LIST

2 ... module holder 2A ... outer peripheral wall 2B ... upper plate 2D ... base portion 2DL ... left base portion 2DR ... right base portion 2Dx ... movable-side base portion 2D1x ... first movable-side base portion 2D2x ... second movable-side base portion 2G ... flange 2GBL ... left-rear flange 2GBR ... right-rear flange 2GFL ... left-front flange 2GFR ... right-front flange 2Sx ... projection 2S1x ... first projection 2S2x ... second projection 2T ... engagement portion 2TL ... left engagement portion 2TR ... right engagement portion 2x ... lens holder 3 ... connection member 3D ... base portion 3DB ... rear base portion 3DF ... front base portion 3DL ... left base portion 3DR ... right base portion 3E ... side portion 3E1 ... first side portion 3E2 ... second side portion 3E3 ... third side portion 3E4 ... fourth side portion 3K ... opening 4 ... cover member 4A ... outer peripheral wall 4A1 ... first side plate 4A2 ... second side plate 4A3 ... third side plate 4A4 ... fourth side plate 4B ... upper plate 4K ... opening 4S ... housing 5 ... metal member 5F ... lower metal member 5F1 ... first lower terminal plate 5F2 ... second lower terminal plate 5F3 ... third lower terminal plate 5F4 ... fourth lower terminal plate 5F5 ... fifth lower terminal plate 5F6 ... sixth lower terminal plate 5F7 ... seventh lower terminal plate 5F8 ... eighth lower terminal plate 5K ... module-side fixed metal member 5K1 ... first fixed-side terminal plate 5K2 ... second fixed-side terminal plate 5K3 ... third fixed-side terminal plate 5K4 ... fourth fixed-side terminal plate 5K5 ... fifth fixed-side terminal plate 5K6 ... sixth fixed-side terminal plate 5K7 ... seventh fixed-side terminal plate 5K8 ... eighth fixed-side terminal plate 5M ... upper metal member 5M1 ... first upper terminal plate 5M2 ... second upper terminal plate 5M3 ... third upper terminal plate 5M4 ... fourth upper terminal plate 5M5 ... fifth upper terminal plate 5M6 ... sixth upper terminal plate 5M7 ... seventh upper terminal plate 5M8 ... eighth upper terminal plate 5W ... module-side movable metal member 5W1 ... first movable-side terminal plate 5W2 ... second movable-side terminal plate 5W3 ... third movable-side terminal plate 5W4 ... fourth movable-side terminal plate 5x ... module-side metal member 6 ... first conductive member 6L ... left conductive member 6R ... right conductive member 6x ... leaf spring 6Ax ... first leaf spring 6A1x ... first portion 6A2x ... second portion 6A3x ... third portion 6A4x ... fourth portion 6A5x ... fifth portion 6Bx ... second leaf spring 6B1x ... first portion 6B2x ... second portion 6B3x ... third portion 6B4x ... fourth portion 6B5x ... fifth portion 6EL, 6ER ... outer fixed portion 6GL, 6GR ... elastic portion 6IL, 6IR ... inner fixed portion 6L ... left conductive member 6R ... right conductive member 7 ... second conductive member 7B ... rear conductive member 7BL ... left-rear conductive member 7BR ... right-rear conductive member 7EBL, 7EBR, 7EFL, 7EFR ... outer fixed portion 7F ... front conductive member 7FL ... left-front conductive member 7FR ... right-front conductive member 7GBL,7GBR, 7GFL, 7GFR ... elastic portion 7IBL, 7IBR, 7IFL, 7IFR ... inner fixed portion 8 ... base member 8D ... base portion 8DB ... rear base portion 8DBL ... left-rear base portion 8DBR ... right-rear base portion 8DF ... front base portion 8DFL ... left-front base portion 8DFR ... right-front base portion 8Dx ... fixed-side base portion 8D1x ... first fixed-side base portion 8D2x ... second fixed-side base portion 8E,8Ex ... side portion 8E1,8E1x ... first side portion 8E2, 8E2x ... second side portion 8E3, 8E3x ... third side portion 8E4,8E4x ... fourth side portion 8K, 8Kx ... opening 8T ... engagement portion 8TB ... rear engagement portion 8TF ... front engagement portion 8x ... module-side base member 9 ... third conductive member 9BL ... left-rear conductive member 9BR ... right-rear conductive member 9EFL,9EFR, 9EBL, 9EBR ... outer fixed portion 9FL ... left-front conductive member 9FR ... right-front conductive member 9GBL,9GBR,9GFL,9GFR ... elastic portion 9IBL,9IBR,9IFL, 9IFR ... inner fixed portion 12x ... cylindrical portion 20 ... first embedded current-conducting member 20B ... rear current-conducting member 20F ... front current-conducting member 20L ... left current-conducting member 20R ... right current-conducting member 20x ... module-side embedded current-conducting member 30 ... second embedded current-conducting member 30BL ... left-rear current-conducting member 30BR ... right-rear current-conducting member 30FL ... left-front current-conducting member 30FR ... right-front current-conducting member 80 ... third embedded current-conducting member 100 ... module driving device 150 ... optical device AD ... imaging element holder CB1 ... first current-conducting member CB2 ... second current-conducting member CB3 ... third current-conducting member CB4 ... fourth current-conducting member CB5 ... fifth current-conducting member CB6 ... sixth current-conducting member CB7 ... seventh current-conducting member CB8 ... eighth current-conducting member CB9 ... ninth current-conducting member CB10 ... tenth current-conducting member CB11 ... 11^{th} current-conducting member CB12 ... 12^{th} current-conducting member CB13 ... 13^{th} current-conducting member CB14 ... 14^{th} current-conducting member CB15 ... 15^{th} current-conducting member CB16 ... 16^{th} current-conducting member CB17 ... 17^{th} current-conducting member CB18 ... 18^{th} current-conducting member CB19 ... 19^{th} current-conducting member CB20 ... 20^{th} current-conducting member CB21 ... 21^{st} current-conducting member CB22 ... 22^{nd} current-conducting member CD1 ... first current-conducting member CD2 ... second current-conducting member CD3 ... third current-conducting member CD4 ... fourth current-conducting member CD5 ... fifth current-conducting member CD6 ... sixth current-conducting member CD7 ... seventh current-conducting member CD8 ... eighth current-conducting member CD9 ... ninth current-conducting member CD10 ... tenth current-conducting member CD11 ... 11^{th} current-conducting member CTL1,CTL2 ... cut line DM ... driver DMx ... module-side driver EC ... intermediate current-conducting member EC1 ... first intermediate current-conducting member EC2 ... second intermediate current-conducting member EC3 ... third intermediate current-conducting member EC4 ... fourth intermediate current-conducting member EC5 ... fifth intermediate current-conducting member EC6 **...** sixth intermediate current-conducting member EC7 **...** seventh intermediate current-conducting member EC8 **...** eighth intermediate current-conducting member EC9 ... ninth intermediate current-conducting member EC10 **...** tenth intermediate current-conducting member FB **...** fixed-side member FBx ... module-side fixed member FC ... flexible substrate G1 ... first groove G1L **...** first left groove G1R ... first right groove G2 **...** second groove G2B ... second rear groove G2F **...** second front groove GM ... guide mechanism GM1 ... first guide mechanism GM1L ... first left guide mechanism GM1R ... first right guide mechanism GM2 **...** second guide mechanism GM2B ... second rear guide mechanism GM2F ... second front guide mechanism H1 ... first recess H1L ... first left recess H1R ... first right recess H2 ... second recess H2B ... second rear recess H2F ... second front recess HS **...** casing IS ... imaging element J1-J4 ... holding portion LC ... lower conductive member LD ... Lens driving device LS ... Lens body MB ... movable-side member MB1 ... first movable portion MB2 ... second movable portion MBx ... module-side movable member MD **...** camera module MG1 ... first magnet MG1L ... first left magnet MG1R ... first right magnet MG2 **...** second magnet MG2L ... second left magnet MG2R ... second right magnet MG3 ... third magnet MG3B ... third rear magnet MG3F ... third front magnet MG4 **...** fourth magnet MG4B ... fourth rear magnet MG4F **...** fourth front magnet N1 ... first housing N1L ... first left housing N1R ... first right housing N2 **...** second housing N2L ... second left housing N2R ... second right housing N3 ... third housing N3B ... third rear housing N3F ... third front housing N4 ... fourth housing N4B ... fourth rear housing N4F ... fourth front housing OA ... optical axis PM,PM1-PM4 ... plate-like portion Q1 ... first rotating body Q1L ... first left rotating body Q1R ... first right rotating body Q2 ... second rotating body Q2B ... second rear-side rotating body Q2F ... second frontside rotating body RX1 ... first rotation axis RX2 ... second rotation axis RX3 ... third rotation axis SA ... shape memory alloy wire SB ... module-side shape memory alloy wire SA1,SB1 ... first wire SA2,SB2 ... second wire SA3,SB3 ... third wire SA4,SB4 ... fourth wire SA5,SB5 ... fifth wire SA6,SB6 ... sixth wire SA7,SB7 ... seventh wire SA8,SB8 ... eighth wire SC1 ... first shape memory alloy wire SC2 ... second shape memory alloy wire SC3 ... third shape memory alloy wire SC4 ... fourth shape memory alloy wire SP ... spacer UC ... upper conductive member V ... engagement portion V1 ... first engagement portion V1L ... first left engagement portion V1R ... first right engagement portion V2 ... second engagement portion V2B ... second rear engagement portion V2F ... second front engagement portion

## Claims

1. A module driving device, comprising:
a fixed-side member;
a module holder configured to hold an optical module and to be movable relative to the fixed-side member, the optical module including a lens body and an imaging element;
a guide mechanism configured to guide rotation of the module holder about an optical axis of the lens body;
a driver configured to rotate the module holder about the optical axis; and
a connection member, wherein
the driver includes
a plurality of shape memory alloy wires that are provided between a movable-side member and the fixed-side member, the movable-side member including the module holder,
the connection member is connected to the module holder at a plurality of first engagement portions of the connection member, and connected to the fixed-side member at a plurality of second engagement portions of the connection member, and
the guide mechanism is provided
between the module holder and the first engagement portions,
between the fixed-side member and the second engagement portions, or
both between the module holder and the first engagement portions and between the fixed-side member and the second engagement portions,
such that the module holder is rotatable about the optical axis.

2. The module driving device according to claim 1, wherein
the module holder is configured to be rotatable about the optical axis between the module holder and the first engagement portions.

3. The module driving device according to claim 1, wherein
the connection member is configured to be rotatable about the optical axis both between the module holder and the first engagement portions and between the fixed-side member and the second engagement portions.

4. The module driving device according to claim 3, wherein
the driver includes
a plurality of first shape memory alloy wires that are provided between a first movable portion including the module holder and a second movable portion including the connection member, and
the plurality of shape memory alloy wires that are provided between the movable-side member and the fixed-side member include a plurality of second shape memory alloy wires that are provided between the second movable portion and the fixed-side member.

5. The module driving device according to claim 4, wherein
the first engagement portions are provided at two positions that face each other across the optical axis and are along a first axial line,
the second engagement portions are provided at two positions that face each other across the optical axis and are along a second axial line,
the first axial line and the second axial line are disposed so as to be orthogonal to each other as viewed along a direction of the optical axis,
the first shape memory alloy wires are disposed at two positions that are apart from each other in an axial line direction of the second axial line across the module holder, and
the second shape memory alloy wires are disposed at two positions that are apart from each other in an axial line direction of the first axial line across the module holder.

6. The module driving device according to claim 5, wherein
two of the first shape memory alloy wires are disposed at two positions that are apart from each other in the axial line direction of the second axial line, and the two of the first shape memory alloy wires cross each other as viewed along the axial line direction of the second axial line, and form a first wire pair, and
two of the second shape memory alloy wires are disposed at two positions that are apart from each other in the axial line direction of the first axial line, and the two of the second shape memory alloy wires cross each other as viewed along the axial line direction of the first axial line, and form a second wire pair.

7. The module driving device according to claim 6, wherein
ends of the two of the first shape memory alloy wires forming the first wire pair are electrically connected to each other, and
ends of the two of the second shape memory alloy wires forming the second wire pair are electrically connected to each other.

8. The module driving device according to claim 6, wherein
the first movable portion includes
first metal members to which ends of the first shape memory alloy wires are to be fixed,
the second movable portion includes
second metal members to which other ends of the first shape memory alloy wires are to be fixed, and
third metal members to which ends of the second shape memory alloy wires are to be fixed,
the fixed-side member includes
fourth metal members to which other ends of the second shape memory alloy wires are to be fixed,
the first metal members and the second metal members each include plates that are disposed substantially parallel to each other, and
the third metal members and the fourth metal members each include plates that are disposed substantially parallel to each other.

9. The module driving device according to any one of claims 5 to 8, wherein
the module holder includes
a current-conducting member used for conducting a current through the first shape memory alloy wires, the second shape memory alloy wires, or both.

10. The module driving device according to any one of claims 5 to 8, further comprising:
a first conductive member of a metal provided so as to connect the module holder and the connection member,
a second conductive member of a metal provided so as to connect the connection member and the fixed-side member, and
a third conductive member of a metal provided so as to connect the module holder and the fixed-side member, wherein
each of the first conductive member, the second conductive member, and the third conductive member forms a conductive path that is electrically connected to at least corresponding one of the first shape memory alloy wires and the second shape memory alloy wires.

11. The module driving device according to claim 10, wherein
two of the first conductive member, the second conductive member, and the third conductive member, and a remaining one of the first conductive member, the second conductive member, and the third conductive member are provided so as to face each other across the connection member in the direction of the optical axis.

12. The module driving device according to any one of claims 3 to 8, wherein
the connection member includes a portion disposed on an upper side of the fixed-side member, and
the module holder includes a portion disposed on a lower side of the connection member.

13. The module driving device according to claim 12, wherein
the guide mechanism includes a first guide mechanism and a second guide mechanism, wherein
the first guide mechanism includes
first rotating bodies that are provided between the module holder and the first engagement portions of the connection member, and
first grooves having a shape of an arc centered on the optical axis, the first grooves being provided in at least one of the module holder or the connection member that face each other across the first rotating bodies, and
the second guide mechanism includes
second rotating bodies that are provided between the fixed-side member and the second engagement portions of the connection member, and
second grooves having a shape of an arc centered on the optical axis, the second grooves being provided in at least one of the fixed-side member or the connection member that face each other across the second rotating bodies, and
the first rotating bodies and the second rotating bodies are provided on the lower side of the connection member.

14. The module driving device according to claim 13, wherein
the connection member and the module holder respectively include a first magnet and a second magnet that are disposed so as to attract each other across the first rotating bodies, and
the connection member and the fixed-side member respectively include a third magnet and a fourth magnet that are disposed so as to attract each other across the second rotating bodies.

15. An optical device, comprising:
the module driving device of any one of claims 5 to 8; and
the optical module held by the module holder.

16. The optical device according to claim 15, wherein
the optical module includes
a module-side fixed member,
a lens holder configured to hold the lens body, and
a module-side driver configured to move the lens holder relative to the module-side fixed member.

17. The optical device according to claim 16, wherein
the module-side driver includes
a plurality of module-side shape memory alloy wires that are provided between a module-side movable member and the module-side fixed member, the module-side movable member including the lens holder,
the plurality of module-side shape memory alloy wires include
two third shape memory alloy wires disposed at two positions that are apart from each other in the axial line direction of the second axial line across the lens holder, and
two fourth shape memory alloy wires disposed at two positions that are apart from each other in the axial line direction of the first axial line across the lens holder, and
the two third shape memory alloy wires cross each other as viewed in the axial line direction of the second axial line, and
the two fourth shape memory alloy wires cross each other as viewed in the axial line direction of the first axial line.

18. An optical device, comprising:
a lens holder configured to hold a lens body;
an imaging element holder provided so as to be immovable relative to an imaging element that is disposed to face the lens body;
a module-side driver configured to move the lens holder relative to a module-side fixed member including the imaging element holder;
a module holder configured to hold the module-side fixed member and to be movable relative to a fixed-side member;
a guide mechanism configured to guide rotation of the module holder about an optical axis of the lens body;
a driver configured to rotate the module holder about the optical axis; and
a connection member, wherein
the driver includes
a plurality of shape memory alloy wires that are provided between a movable-side member and the fixed-side member, the movable-side member including the module holder,
the connection member is connected to the module holder at a plurality of first engagement portions of the connection member, and connected to the fixed-side member at a plurality of second engagement portions, and
the guide mechanism is provided
between the module holder and the first engagement portions,
between the fixed-side member and the second engagement portions, or
both between the module holder and the first engagement portions and between the fixed-side member and the second engagement portions,
such that the module holder is rotatable about the optical axis.
